(19) Europäisches Patentamt
European Patent Office
Office européen des brevets

(11) EP 1 419 816 B1

(12) EUROPEAN PATENT SPECIFICATION

(45) Date of publication and mention
of the grant of the patent:
25.01.2012 Bulletin 2012/04

(51) Int Cl.:
B01J 35/04 (2006.01)   B01D 53/86 (2006.01)
B32B 3/12 (2006.01)

(21) Application number: 02751668.1

(22) Date of filing: 25.07.2002

(86) International application number:
PCT/JP2002/007515

(87) International publication number:
WO 2003/009938 (06.02.2003 Gazette 2003/06)

(54) HONEYCOMB STRUCTURAL BODY FOR EXHAUST EMISSION CONTROL AND HONEYCOMB CATALYST BODY FOR EXHAUST EMISSION CONTROL

WABENSTRUKTURKÖRPER FÜR DIE ABGASREINIGUNG UND WABENFÖRMIGER KATALYSATORKÖRPER FÜR DIE ABGASREINIGUNG

CORPS STRUCTUREL EN NID D'ABEILLES POUR LA REGULATION DES GAZ D'ECHAPPEMENT ET CORPS CATALYSEUR EN NID D'ABEILLES POUR LA REGULATION DES GAZ D'ECHAPPEMENT

(84) Designated Contracting States:
DE FR

(30) Priority: 25.07.2001 JP 2001224975

(43) Date of publication of application:
19.05.2004 Bulletin 2004/21

(73) Proprietor: NGK Insulators, Ltd.
Nagoya-city, Aichi 467-8530 (JP)

(72) Inventors:
• NODA, Naomi
c/o NGK INSULATORS, LTD.
Nagoya-shi,
Aichi 467-8530 (JP)
• SUZUKI, Junichi
c/o NGK INSULATORS, LTD.
Nagoya-shi,
Aichi 467-8530 (JP)
• TAKAGI, Shigekazu
c/o NGK INSULATORS, LTD.
Nagoya-shi,
Aichi 467-8530 (JP)
• MIYAIRI, Yukio
c/o NGK INSULATORS, LTD.
Nagoya-shi,
Aichi 467-8530 (JP)

(74) Representative: Paget, Hugh Charles Edward et al
Mewburn Ellis LLP
33 Gutter Lane
London
EC2V 8AS (GB)

(56) References cited:
EP-A- 1 063 396      EP-A2- 1 101 910
JP-A- 6 134 304      JP-A- 8 012 460
JP-A- 10 235 206      JP-A- 59 199 586
JP-A- 2001 046 886      JP-U- 61 113 915
US-A- 5 063 029

## Description

Technical Field

The present invention relates to a honeycomb structural body for exhaust gas purification. More particularly, the present invention relates to a honeycomb structural body for exhaust gas purification which has a sufficient thermal shock resistance as a honeycomb structural body even when made of a material having a larger thermal expansion coefficient ($\alpha \gtrsim 1 \times 10^{-6}$, wherein $\alpha$ [1/K] is a thermal expansion coefficient of honeycomb in a direction perpendicular to the flow direction of gas) and having a lower thermal shock resistance compared with cordierite widely used for purification of automobile exhaust gas, and both of which can be used over a long period of time.

Background Art

In recent years, the regulation for exhaust gas has become stricter and lean burn engines, direct injection engines, etc. have come to be used widely. In this connection, $NO_x$ occlusion catalysts capable of effectively purifying the $NO_x$ present in exhaust gas have been put into practical use. As the $NO_x$ occlusion components used in these $NO_x$ occlusion catalysts, there are known alkali metals such as K, Na, Li, Cs and the like; alkaline earth metals such as Ba, Ca and the like; rare earth elements such as La, Y and the like; and so forth. Recently, attention is being paid particularly to K because it is superior in $NO_x$ occlusion ability at a high temperature range.

These $NO_x$ occlusion catalysts are ordinarily constituted by loading a catalyst layer containing the above-mentioned $NO_x$ occlusion component(s), on a carrier made of an oxide type ceramic material (e.g. cordierite) or on a metal material (e.g. Fe-Cr-Al alloy). With respect to this carrier, there is a problem that it is easily corroded and deteriorated by alkali metals and some alkaline earth metals, which have been activated under an exhaust gas of high temperatures, particularly by K, Na, Li and Ca. In particular, in the case of a cordierite carrier constituted by an oxide type ceramic material, the problem becomes so serious that cracks are formed as a consequence of reaction with the above-mentioned alkali metals, etc.

As a measure for suppressing such deterioration of carrier, there is disclosed a technique of allowing the porous oxide particles constituting a catalyst layer, to contain silicon which reacts with alkali metals easily, allowing the alkali metal present in the catalyst layer in the vicinity of the interface between catalyst layer and carrier, to react with the silicon before the alkali metal moves into the carrier, and thereby preventing the movement of the alkali metal into the carrier (JP-A-2000-279810). In this literature, there is also disclosed a technique of forming a zirconia layer between the carrier and the catalyst layer and preventing, owing to the presence of this zirconia layer, the movement of the alkali metal present in the catalyst layer, into the carrier. There is also disclosed a technique of using alumina or zirconia as a carrier for $NO_x$ occlusion catalyst (JP-A-10-165817).

In the case of allowing the porous oxide particles to contain silicon, in the above-mentioned technique disclosed in JP-A-2000-279810, the movement of alkali metal into carrier can be prevented; however, there has been a problem that the NOx occlusion ability of alkali metal is lost by the reaction of alkali metal with silicon. Also, in the case of forming a zirconia layer (a corrosion-resistant material) between the carrier and the catalyst layer, there has been a problem that it is extremely difficult to form a dense zirconia layer on a porous carrier without generation of cracks, pinholes, exposed portion, etc. In the above-mentioned JP-A-10-165817, the corrosion of carrier by alkali metal is preventable; however, since the carrier has a large thermal expansion coefficient, the technique has been unable to be put to practical use from the standpoint of thermal shock resistance.

Meanwhile, also in SCR catalysts for diesel exhaust gas (for example, a solid type using a carrier made of a catalyst-containing material), there is a problem of insufficient thermal shock resistance because they are molded into a honeycomb shape using a carrier made mainly of a material of large thermal expansion coefficient, such as $TiO_2$, zeolite, $Al_2O_3$ or compound oxide thereof. A solution therefor has been sought.

JP-A-06-134304 (1994) describes a honeycomb, suitable for use as a catalyst carrier, which is made of cordierite and has high heat resistance and thermal shock resistance.

Disclosure of the Invention

The present invention has been made in view of the above-mentioned problems, and aims at providing a honeycomb structural body for exhaust gas purification and a honeycomb catalyst body for exhaust gas purification, both of which have a sufficient thermal shock resistance as a honeycomb structural body even when made of a material having a larger thermal expansion coefficient ($\alpha \geqq 1 \times 10^{-6}$) and smaller thermal shock resistance compared with cordierite widely used for purification of automobile exhaust gas, and both of which are superior in resistances to alkali metals and alkaline earth metals, and can be used over a long period of time even in the presence of such metals.

The present inventors made an intensive study in order to achieve the above aim. As a result, it was found that by allowing the cell partition walls constituting a structural body (a carrier) or a catalyst body, to satisfy a relation shown by a particular formula with respect to the material properties cell partition wall and the cell structure, there can be provided a structural body (a carrier) or a catalyst body, both of which have a superior thermal shock resistance even when made of a material having a large thermal expansion coefficient ($\alpha \geqq 1 \times 10^{-6}$) and small thermal shock resistance, and both of which are superior in resistances to alkali metals and alkaline earth metals, and can be used over a long period of time even in the presence of such metals. The present invention has been completed based on the above finding. Hence, the present invention provides the following honeycomb structural body for exhaust gas purification and the following honeycomb catalyst body for exhaust gas purification.

According to the present invention, there is provided a honeycomb structural body for exhaust gas purification, which comprises; a plurality of cell partition walls (ribs) forming a group of cells adjacent to each other, and a honeycomb outer wall surrounding and holding the group of cells; wherein an exhaust gas flowing through the cells is purified by a catalyst layer to be loaded on the cell partition walls or by a catalyst to be contained in the cell partition walls; characterized in that the cell partition walls satisfy a relation shown by the following expression (1), with respect to the properties and the cell structure:

$$\sigma /E \geqq 0.0161 \cdot \alpha \cdot (GSA) / \{H_D \cdot (\rho_c \cdot C \cdot \lambda_c)^{0.5}\} \qquad (1)$$

{in the expression (1), $\sigma$ [MPa] is a material strength (which means a bending strength of one rib and specifically means a material strength as measured by four-point bending according to JIS R 1601(except for the height of beam), or a material strength when the test result by another method has been reduced to the present method based on effective volume); E [MPa] is a material Young's modulus (one-rib bending); $\alpha$ [1/K] is a thermal expansion coefficient of honeycomb in a direction perpendicular to the direction of gas flow, with a proviso of $\alpha \geqq 1 \times 10^{-6}$; GSA [$m^2/m^3$] is a geographical surface area per volume of honeycomb structure; $H_D$ [m] is a hydraulic diameter of the cell of honeycomb structure; $\rho_c$ [$kg/m^3$] is a bulk density of honeycomb structure; C [J/kgK] is a material specific heat; and $\lambda_c$ [W/mK] is a thermal conductivity of the cell of honeycomb structure which is $\lambda \cdot b/p$ ($\lambda$ is a material thermal conductivity [W/mK], b is a rib thickness [m], and p is a cell pitch (an interval between ribs) [m])}.

The honeycomb structural body may be provided with a thermal stress-relieving means for relieving a thermal stress applied to the cell partition walls and to the honeycomb outer wall in exhaust gas purification.

Incidentally, as the thermal stress-relieving means, there can be mentioned at least one slit which is formed from the surface of the honeycomb outer wall toward the central axis of honeycomb structural body and at least part of which opens at the surface of the honeycomb outer wall.

The thermal stress-relieving means may also be such that the group of cells is divided into two or more first honeycomb segments at a plane parallel to the central axis of honeycomb structural body, that the honeycomb segments are bonded to each other as necessary by a bonding layer, and that an aspect ratio [(L1)/(P1)] of each first honeycomb segment between its length (L1) in exhaust gas flow direction (central axis direction) and its diameter (one side) (P1) satisfies a relation shown by the following expression (2):

$$2 \leqq [(L1)/(P1)] \leqq 10 \qquad (2)$$

The thermal stress-relieving means may also be a form of multiple portions being constituted by dividing the group of cells into two or more second honeycomb segments at a plane perpendicular to the central axis. In this case, the second honeycomb segment satisfies a relation shown by the following expression (3) with respect to an aspect ratio [(L2)/(P2)] of the segment between a diameter (one side) (P2) and a length (L2) in exhaust gas flow direction:

$$0.5 \leqq [(P2)/(L2)] \leqq 5 \qquad (3)$$

The thermal stress-relieving means may also be at least one notch provided in the cell partition walls forming the group of cells, in the flow direction of exhaust gas (the central axis direction).

The thermal stress-relieving means may also be formed by allowing each cell of the group of cells to have a sectional shape of three or more cornered polygon.

The thermal stress-relieving means may also be such that the partition wall thickness ($T_{10}$) of the cells present in a portion extending from the central axis up to at least 10% of the radius (half of one side) satisfies a relation shown by the following expression (4) in relation to the basic cell partition wall thickness ($T_c$):

$$1.2 \leqq T_{10}/T_c \quad (4)$$

The thermal stress-relieving means may also be such that the group of cells satisfies a following expression (5) with respect to an aspect ratio [(L3)/(P3)] of the whole group of cells between a length (L3) in the flow direction of exhaust gas (the axial direction) and a diameter (one side) (P3):

$$0.5 \leqq [(L3)/(P3)] \leqq 2 \quad (5)$$

Any of the above-mentioned thermal stress-relieving means may be provided on a honeycomb structural body for exhaust gas purification, which comprises a plurality of cell partition walls (ribs) forming a group of cells adjacent to each other and a honeycomb outer wall surrounding and holding the group of cells and wherein an exhaust gas flowing through the cells is purified by a catalyst layer to be loaded on the cell partition walls or by a catalyst to be contained in the cell partition walls, wherein the cell partition walls satisfy a relation shown by the following expression (1), with respect to the material properties of rib and the cell structure:

$$\sigma/E \geqq 0.0161 \cdot \alpha \cdot (GSA)/\{H_D \cdot (\rho_c \cdot C \cdot \lambda_c)^{0.5}\} \quad (1)$$

{in the expression (1), $\sigma$ [MPa] is a material strength (which means a bending strength of one rib and specifically means a material strength as measured by four-point bending according to JIS R 1601(except for the height of beam), or a material strength when the test result by another method has been reduced to the present method based on effective volume); E [MPa] is a material Young's modulus (one-rib bending); $\alpha$ [1/K] is a thermal expansion coefficient of honeycomb in a direction perpendicular to the direction of gas flow, with a proviso of $\alpha \geqq 1 \times 10^{-6}$; GSA [$m^2/m^3$] is a geographical surface area per volume of honeycomb structure; $H_D$ [m] is a hydraulic diameter of the cell of honeycomb structure; $\rho_c$ [$kg/m^3$] is a bulk density of honeycomb structure; C [J/kgK] is a material specific heat; and $\lambda_c$ [W/mK] is a thermal conductivity of the cell of honeycomb structure which is $\lambda \cdot b/p$ ($\lambda$ is a material thermal conductivity [W/mK], b is a rib thickness [m], and p is a cell pitch (an interval between ribs) [m])}.

According to the present invention, there is further provided a honeycomb catalyst body for exhaust gas purification, wherein, in the above-mentioned honeycomb structural body for exhaust gas purification, a catalyst layer is loaded on the cell partition walls or a catalyst is contained in the cell partition walls.

The catalyst layer or the catalyst may contain an alkali metal and/or an alkaline earth metal.

The main constituent material of the cell partition walls of the above honeycomb structural body for exhaust gas purification may contain at least one kind selected from the group consisting of alumina, zirconia, titania, zeolite, SiC, SiN, mullite, lithium aluminum silicate (LAS), titanium phosphate, perovskite, spinel, chamotte, non-oriented cordierite and mixtures or composites thereof.

The catalyst layer or the catalyst may be a selective catalytic reduction (hereinafter may be referred to as SCR) catalyst material having functions of the main catalyst and co-catalyst of SCR reaction or either of the functions. The SCR catalyst material may contain at least one kind selected from the group consisting of noble metals; V, VI, VII and VIII group transition metals; rare earth element oxides such as $CeO_2$ and $La_2O_3$; two or more kinds of compound oxides selected from rare earth element oxides such as $CeO_2$ and $La_2O_3$, or compound oxides between Zr and at least one kind selected from rare earth element oxides such as $CeO_2$ and $La_2O_3$; oxides of alkali metals such as Na and K; and oxides of alkaline earth metals such as Ba and Sr.

In the honeycomb catalyst body for exhaust gas purification having a catalyst layer or a catalyst, each containing the above-mentioned oxide(s), the main constituent material of the cell partition walls may contain at least one kind selected from the group consisting of alumina, zirconia, titania, zeolite, SiC, SiN, mullite, lithium aluminum silicate (LAS), titanium phosphate, perovskite, spinel, chamotte, non-oriented cordierite and mixtures or composites thereof. The main constituent material of the cell partition walls of the above honeycomb structural body for exhaust gas purification may contain at least one kind selected from the group consisting of $TiO_2$, zeolite, $Al_2O_3$ and compound oxides of two or more kinds thereof.

Brief Description of the Drawings

Figs. 1(a) and 1(b) are explanatory drawings schematically showing an example of the honeycomb structural body for exhaust gas purification according to the present invention. (a) is a perspective view and (b) is a top view.

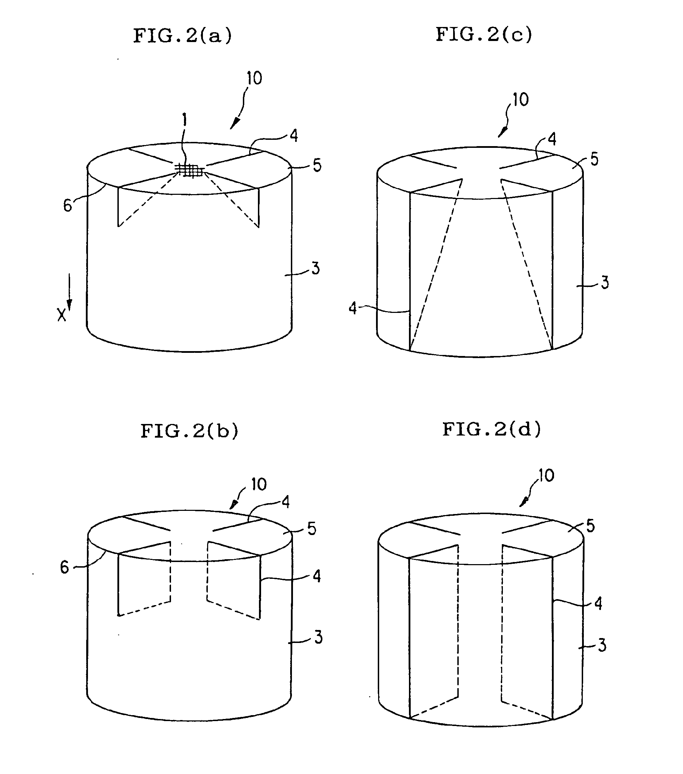

Figs. 2(a) to 2(d) are perspective views schematically showing examples of the honeycomb structural body for exhaust gas purification having slits according to the present invention. Fig. 2(a) is an example wherein slits have been formed each at the edge portion of one end face in a triangular shape with the depth being changed in connection with the position in diameter direction; Fig. 2(b) is an example wherein slits have been formed each in a rectangular shape with the depth being unchanged; Fig. 2(c) is an example wherein slits have been formed in such a manner that each slit opens over the entire length of the surface of honeycomb outer wall along the flow direction of exhaust gas and has a triangular shape with the depth of diameter direction being changed; and Fig. 2 (d) is an example wherein slits have been formed in such a manner that each slit opens over the entire length of the surface of honeycomb outer wall along the flow direction of exhaust gas and has a tetragonal shape with the depth being changed in connection with the position in diameter direction.

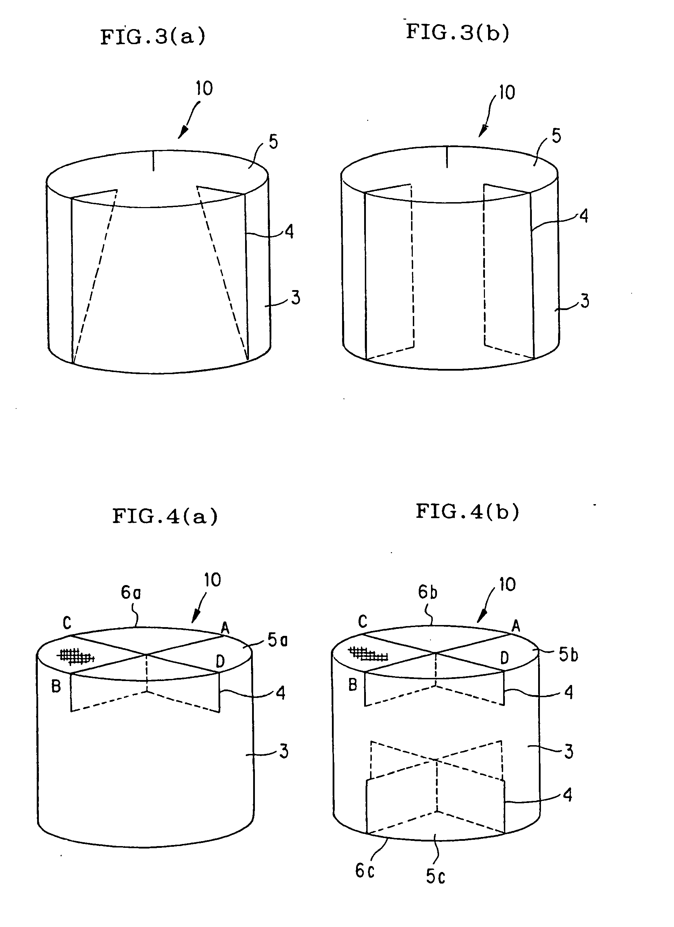

Fig. 3(a) and 3(b) are perspective views schematically showing other examples of the honeycomb structural body for exhaust gas purification having slits according to the present invention. Fig. 3(a) is an example wherein slits have been formed in such a manner that each slit opens over the entire length of the surface of honeycomb outer wall along the flow direction of exhaust gas and has a triangular shape with the depth being changed in connection with the position in diameter direction, and Fig. 3(b) is an example wherein slits have been formed in such a manner that each slit opens over the entire length of the surface of honeycomb outer wall along the flow direction of exhaust gas and has a tetragonal shape with the depth being unchanged.

Figs. 4(a) and 4(b) are perspective views schematically showing still other examples of the honeycomb structural body for exhaust gas purification having slits according to the present invention. Fig. 4(a) is an example wherein slits have been formed at one end face of the surface of honeycomb outer wall so as to continuously connect two points A and B of the edge portion of the end face to each other and two points C and D of the edge portion to each other, and Fig. 4(b) is an example wherein slits have been formed at two end faces of the surface of honeycomb outer wall so as to continuously connect, for example, two points A and B of the edge portion of the end face to each other and two points C and D of the edge portion to each other.

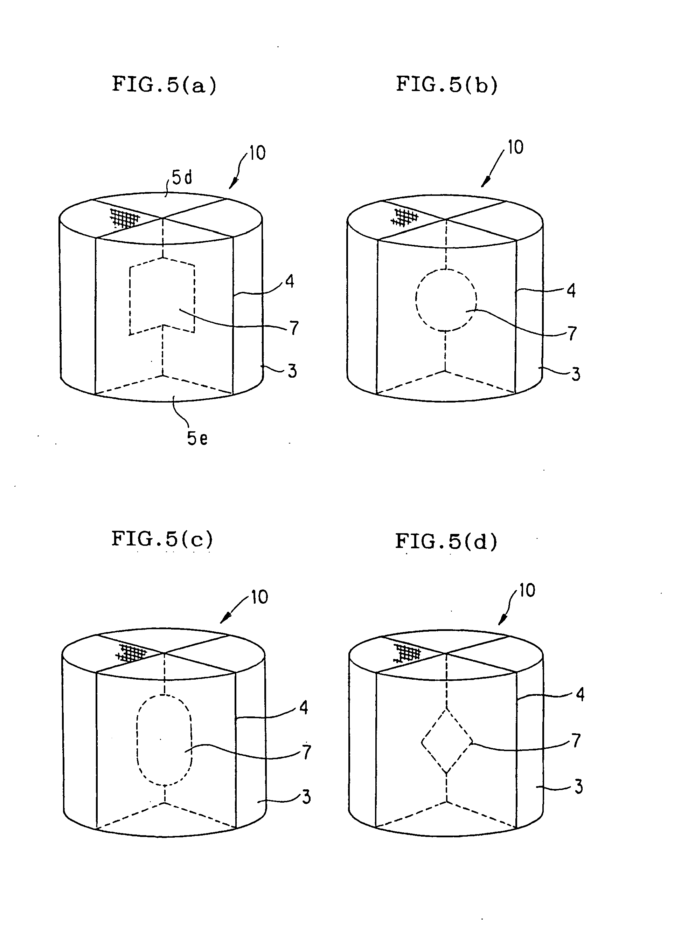

Figs. 5(a) to 5(d) are perspective views schematically showing other examples of the honeycomb structural body for exhaust gas purification having slits according to the present invention, wherein a connecting portion has been formed at the intersection of the slits so that the connecting portion is located at the center of the honeycomb structural body. Fig. 5(a) is an example wherein the connecting portion has been formed in a cylindrical shape; Fig. 5(b) is an example wherein the connecting portion has been formed in a spherical shape; Fig. 5(c) is an example wherein the connecting portion has been formed in a cylindrical shape with its both ends being semi-circular; and Fig. 5(d) is an example wherein the connecting portion has been formed in a circular cone shape.

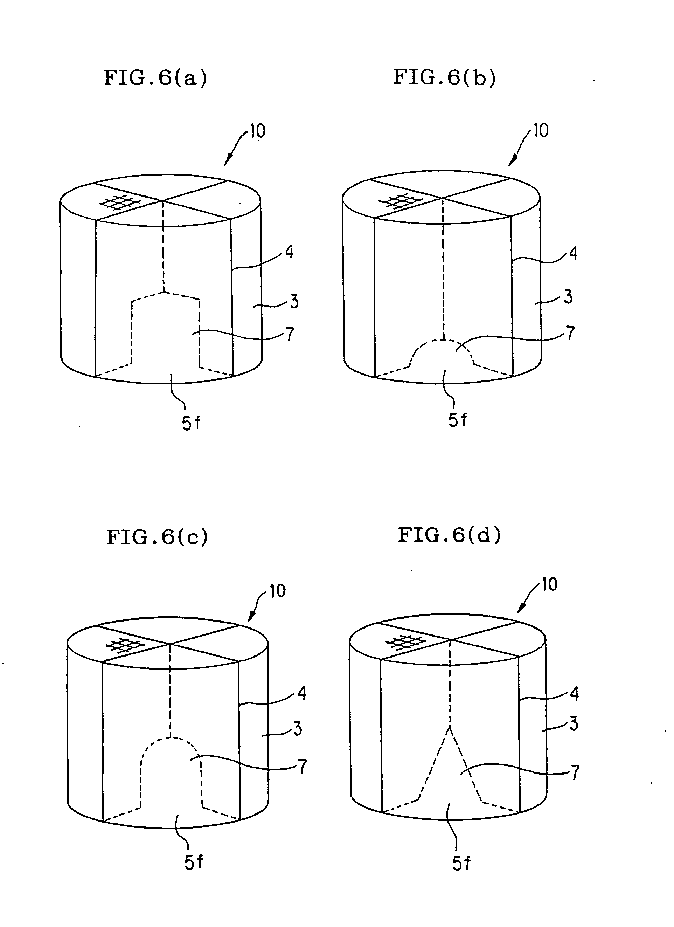

Figs. 6(a) to 6(d) are perspective views schematically showing still other examples of the honeycomb structural body for exhaust gas purification having slits according to the present invention. Fig. 6(a) is an example wherein a connecting portion is formed in a cylindrical shape and its lower end opens at the surface of the lower end of honeycomb outer wall; Fig. 6(b) is an example wherein a connecting portion is formed in a semi-spherical shape and its lower end opens at the surface of the lower end of honeycomb outer wall; Fig. 6(c) is an example wherein a connecting portion is formed in a cylindrical shape, its upper end has a semi-spherical shape, and its lower end opens at the surface of the lower end of honeycomb outer wall; and Fig. 6(d) is an example wherein a connecting portion is formed in a cylindrical shape and its one end opens at the surface of the lower end of honeycomb outer wall.

Fig. 7 is a perspective view schematically showing still other example of the honeycomb structural body for exhaust gas purification having slits according to the present invention.

Fig. 8 is a perspective view schematically showing still other example of the honeycomb structural body for exhaust gas purification having slits according to the present invention.

Figs. 9(a) to 9(d) are explanatory drawings schematically showing examples of slits arrangement in the honeycomb structural body for exhaust gas purification having slits according to the present invention. Fig. 9(a) is a top view; Fig. 9(b) is a front view thereof; Fig. 9(c) is a side view thereof; and Fig. 9(d) is a bottom view thereof.

Figs. 10(a) and 10(b) are explanatory drawings showing methods for slits formation in the honeycomb structural body for exhaust gas purification having slits according to the present invention. (a) is a case wherein slits have been formed parallel to the cell partition walls, and (b) is a case wherein slits have been formed so as to cut the cell partition walls obliquely.

Figs. 11(a) and 11(b) are explanatory drawings schematically showing a stress-relieving structure at the front end of each slit in the honeycomb structural body for exhaust gas purification having slits according to the present invention. (a) is a slit having, at the front end, a stress-relieving portion having a radius of curvature, and (b) is a slit having a branched front end.

Figs. 12(a) and 12(b) are explanatory drawings schematically showing the form of slit in the honeycomb structural body for exhaust gas purification having slits according to the present invention. (a) is a slit formed by partially cutting the cell partition walls, and (b) is a slit formed by partially removing the cell partition walls.

Figs. 13(a) to 13(d) are explanatory drawings schematically showing various forms of the first honeycomb segments formed by dividing a honeycomb structural body into two or more parts in its diameter direction.

Fig. 14 is a perspective view schematically showing an aspect ratio of a form of the first honeycomb segments formed by dividing a honeycomb structural body into two or more parts in its diameter direction.

Fig. 15 is a perspective view schematically showing a test piece cut out from the honeycomb structural body for exhaust gas purification according to the present invention.

Fig. 16 is an explanatory drawing schematically showing an example of the four-point bending test.

Fig. 17 is a perspective view schematically showing an example of the second honeycomb segments formed by dividing a honeycomb structural body into two or more parts at a plane perpendicular to the central axis of the present honeycomb structural body.

Fig. 18 is an explanatory drawing schematically showing an example of the honeycomb structural body for exhaust gas purification having at least one notch provided in the flow direction of exhaust gas.

Fig. 19 is an explanatory drawing schematically showing another example of the honeycomb structural body for exhaust gas purification having at least one notch provided in the flow direction of exhaust gas.

Fig. 20 is an explanatory drawing schematically showing another example of the honeycomb structural body for exhaust gas purification having at least one notch provided in the flow direction of exhaust gas.

Fig. 21 is an explanatory drawing schematically showing another example of the honeycomb structural body for exhaust gas purification having at least one notch provided in the flow direction of exhaust gas.

Fig. 22 is an explanatory drawing schematically showing another example of the honeycomb structural body for exhaust gas purification having at least one notch provided in the flow direction of exhaust gas.

Fig. 23 is an explanatory drawing schematically showing another example of the honeycomb structural body for exhaust gas purification having at least one notch provided in the flow direction of exhaust gas.

Figs. 24(a) to 24(c) are partial sectional views each schematically showing a sectional shape of cell partition walls, in the honeycomb structural body for exhaust gas purification according to the present invention. Fig. 24(a) is a case wherein the sectional shape has been changed in an inverse trapezoidal shape; Fig. 24(b) is a case wherein the sectional shape has been changed in a spool-like shape; and Fig. 24(c) is a case wherein the sectional shape has been changed in a rectangular shape.

Fig. 25 is a perspective view schematically showing the aspect ratio [(L3)/(P3)] of a honeycomb structural body for exhaust gas purification per se according to the present invention, which has been constituted by bonding.

Fig. 26 is a graph showing the results of inspection of the cracks generated in the structural bodies of the present invention satisfying the formula (1), obtained in Examples and the structural bodies not satisfying the formula (1), obtained in Comparative Examples.

Best Mode for Carrying Out the Invention

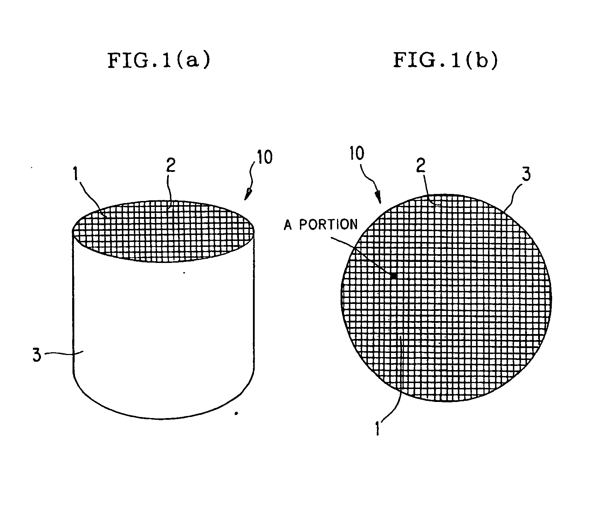

As shown in Figs. 1(a) and 1(b), the honeycomb structural body 10 for exhaust gas purification according to the present invention is a honeycomb structural body 10 for exhaust gas purification, which comprises a plurality of cell partition walls (ribs) 2 forming a group of cells 1 adjacent to each other and a honeycomb outer wall 3 surrounding and holding the group of cells 1 and wherein an exhaust gas flowing through the cells 1 is purified by a catalyst layer (not shown) to be loaded on the cell partition walls 2 or by a catalyst (not shown) to be contained in the cell partition walls 2, characterized in that the cell partition walls 2 and the honeycomb outer wall 3 satisfy a relation shown by the expression formula (1), with respect to the material properties and the cell structure:

$$\sigma / E \geqq 0.0161 \cdot \alpha \cdot (GSA) / \{H_D \cdot (\rho_c \cdot C \cdot \lambda_c)^{0.5}\} \qquad (1)$$

{{in the expression (1), $\sigma$ [MPa] is a material strength (which means a bending strength of one rib and specifically means a material strength as measured by four-point bending according to JIS R 1601(except for the height of beam), or a material strength when the test result by another method has been reduced to the present method based on effective volume); E [MPa] is a material Young's modulus (one-rib bending); $\alpha$ [1/K] is a thermal expansion coefficient of honeycomb in a direction perpendicular to the direction of gas flow; GSA [$m^2/m^3$] is a geographical surface area per volume of honeycomb structure; $H_D$ [m] is a hydraulic diameter of the cell of honeycomb structure; $\rho_c$ [kg/$m^3$] is a bulk

density of honeycomb structure; C [J/kgK] is a material specific heat; and $\lambda_c$ [W/mK] is a thermal conductivity of the cell of honeycomb structure which is $\lambda \cdot b/p$ ($\lambda$ is a material thermal conductivity [W/mK], b is a rib thickness [m], and p is a cell pitch (an interval between ribs) [m])}.

Specific explanation is made below on the above expression (1).

Inside-honeycomb temperature gradient which causes a thermal stress therein, appears owing to a phenomenon that the amount of heat conduction between gas and honeycomb differs depending upon the position of honeycomb during heating and cooling honeycomb by gas. When the inside-solid heat conduction is sufficient, the degree of the temperature gradient is alleviated by the inside-solid heat flow from the portion of large heat acceptance to the portion of small heat acceptance or from the portion of small heat loss to the portion of large heat loss. The degree of temperature gradient appearing owing to such transitional and local heat conduction to solid from outside is known to be theoretically proportional to the following expression (6):

$$Bi \cdot F_0^{1/2} \quad (6)$$

{in the expression (6), Bi (Biot number) and $F_o$ (Fourier number) are shown by the following expressions (7) and (8), respectively:

$$Bi = (h \cdot l)/\lambda \quad (7),$$

$$F_0 = (\lambda \cdot t_0)/(\rho \cdot c \cdot l^2) \quad (8)$$

[in the expression (7) and the expression (8), h is a heat conduction coefficient (between solid and gas); 1 is a representative length; $\lambda$ is a heat conductivity (solid); $\rho$ is a density (solid); c is a heat capacity per unit volume (solid); and $t_o$ is a representative time].
The degree of temperature gradient is proportional to the product of a representative temperature difference between gas and solid $\Delta T$ and the above expression (6). By substituting the above expressions (7) and (8) for the product, the following expression (9) is obtained:

$$\Delta T \cdot Bi \cdot F_0^{1/2} = \Delta T \cdot h \cdot t_0^{1/2}/(\rho \cdot c \cdot \lambda)^{1/2} \quad (9)$$

With respect to the laminar flow heat conduction within through channels, the following expression (10) holds:

$$h = Nu \cdot \lambda_g/H_D \quad (10)$$

[in the expression (10), h is a heat conduction coefficient (between cell partition wall and incoming gas); Nu (Nusselt number) is 3.77; $H_D$ is a hydraulic diameter of passage; and $\lambda_g$ is a heat conductivity of gas].
By substituting the expression (10), the expression (9) is rewritten into the following expression (11)

$$\Delta T \cdot t_0^{1/2} \cdot Nu \cdot \lambda_g/[(\rho \cdot c \cdot \lambda)^{1/2} \cdot H_D] \quad (11)$$

Here, using a product between the degree of temperature gradient and a heat conduction area $GSA \cdot L^3$ when a representative length L of local heating and cooling region is assumed, inside-solid temperature difference parameter was expressed by the following expression (12):

$$(\text{inside-solid temperature difference parameter}) = C1 \cdot$$

$$GSA/[(\rho \cdot c \cdot \lambda)^{1/2} \cdot H_D] \quad (12)$$

[in the expression (12), CI is $\Delta T \cdot t_o^{1/2} \cdot Nu \cdot \lambda_g \cdot L^3$].

Further, thermal stress parameter was defined by the following expression (13) as a product between inside-solid temperature difference parameter, thermal expansion coefficient $\alpha$ and Young's modulus E:

$$(\text{inside-solid temperature difference parameter}) =$$

$$(\text{inside-solid temperature difference parameter}) \cdot \alpha \cdot E \quad (13)$$

The thus-introduced thermal stress parameter is functions of material properties and cell structure, and corresponds to a thermal stress assumed to generate when the material properties and the cell structure are employed. When the strength of actually used material is not smaller than the thermal stress parameter, it is considered that no breakage occurs.

This relation is expressed by the following expression (14):

$$(\text{strength of material})/E \geqq (\text{thermal stress}$$

$$\text{parameter})/E \quad (14)$$

and this is equivalent to the above expression (1).

In determining the CI, truly theoretical selection is impossible with respect to the representative time $t_o$ and the representative length L. As a result of trial and error based on the comparison with trial production and test result thereof, $\lambda_g$ = 0.061 w/mK and Nu = 3.77 were assumed and there were selected L = 0.04 m, $t_o$ = 5 sec and $\Delta T$ = 500 K to obtain C1 = $1.61 \times 10^{-2}$. By employing this CI, it was found that there is a good correlation between whether or not the expression (14), i.e. the expression (1) is satisfied and whether or not thermal stress breakage occurs, in wide ranges of the use conditions, material and structure considered by the present invention.

The honeycomb structural body for exhaust gas purification according to the present invention may be provided with a thermal stress-relieving means for relieving a thermal stress applied to the cell partition walls and the honeycomb outer wall in exhaust gas purification.

Hereinafter, explanation is made on specific examples of the thermal stress-relieving means which may be used.

As the first example of the thermal stress-relieving means used in the honeycomb structural body 10, there can be mentioned at least one slit 4 which is formed from the surface of the honeycomb outer wall 3 toward the central axis (not shown) of honeycomb structural body and at least part of which opens at the surface of the honeycomb outer wall 3, as shown in Figs. 2(a) to 2(d).

Separately from the formation in the flow direction of exhaust gas (the central axis direction) as in Figs. 2(a) to 2(d), each slit may also be formed in a direction perpendicular to the flow direction of exhaust gas (the central axis direction), which is not shown. Further, formation in the above two directions is possible as long as the honeycomb structural body has reasonable strength.

In the honeycomb structural body 10 for exhaust gas purification having the above-mentioned thermal stress-relieving means, it is preferred that each slit 4 is formed at least at one end face 5 at least at the edge portion 6 thereof.

In this case, in a direction parallel to the flow direction of exhaust gas [the central axis direction, that is, an X direction in Fig. 2(a)], the length of the opening portion at the surface of the honeycomb outer wall 3 of each slit 4 formed at the edge portion 6 of end face, is preferably 10% or more of the total length of the honeycomb structural body 10 for exhaust gas purification; and the length of the opening portion at the end face 5 of the slit is preferably 10% or more of the diameter of the honeycomb structural body 10 for exhaust gas purification.

When the honeycomb structural body 10 for exhaust gas purification is used in such an environment that non-uniformity of temperature extends in the whole portion (total length) of the honeycomb structural body 10 for exhaust gas purification, the slit 4 is preferably formed so as to open over the total length of the surface of the honeycomb outer wall 3 in the flow direction of exhaust gas (the central axis direction, i.e. the X direction).

In the honeycomb structural body 10 for exhaust gas purification shown in Fig. 2(a), four slits 4 are formed at the edge portion 6 of one end face 5 each with the depth being changed in connection with the position in diameter direction so as to have a triangular shape; in the honeycomb structural body 10 for exhaust gas purification shown in Fig. 2(b), four slits 4 are formed with the depth being unchanged so as to have a rectangular shape; in the honeycomb structural body 10 for exhaust gas purification shown in Fig. 2(c), four slits 4 are formed in such a manner that each slit 4 opens over the total length of the surface of honeycomb outer wall 3 along the flow direction of exhaust gas (the central axis direction, i.e. the X direction), the slits 4 having the depth being changed in connection with the position in diameter direction so as to have a triangular shape; and in the honeycomb structural body 10 for exhaust gas purification shown in Fig. 2(d), four slits 4 are formed in such a manner that each slit 4 opens over the total length of the surface of honeycomb outer wall 3 along the flow direction of exhaust gas (the central axis direction, i.e. the X direction) with the depth being unchanged so as to have a rectangular shape.

By forming the slit 4 as shown in Figs. 2(a) to 2(d), each individual portion of the honeycomb structural body 10 for exhaust gas purification can make free deformation without restraint by other portions, even when non-uniform temperature distribution such as local higher or lower temperature appears therein; the thermal stress can be reduced; and the generation of cracks caused by thermal shock can be minimized.

In Fig. 3(a) as in Fig. 2(c), three slits 4 are formed in such a manner that each slit 4 opens over the total length of the surface of honeycomb outer wall 3 along the flow direction of exhaust gas (the central axis direction, i.e. the X direction), the slits 4 having the depth being changed in connection with the position in diameter direction so as to have a triangular shape. In Fig. 3(b) as in Fig. 2(d), three slits 4 are formed in such a manner that each slit 4 opens over the total length of the surface of honeycomb outer wall 3 along the flow direction of exhaust gas (the central axis direction, i.e. the X direction) with the depth being unchanged so as to have a rectangular shape Such formation of slits is particularly effective when the resulting honeycomb structural body is used in such an environment that non-uniformity of temperature extends in the whole portion (total length) of the honeycomb structural body.

Fig. 4(a) is a case wherein slits 4 have been formed at one end face 5a of the surface of honeycomb outer wall 3 so that two points A and B of the edge portion 6a of the end face are continuously connected to each other and two points C and D of the edge portion 6a are continuously connected to each other. Fig. 4(b) is a case wherein slits 4 have been formed at two end faces 5b and 5c of the surface of honeycomb outer wall 3 so that, for example, two points A and B of the edge portions 6b and 6c are continuously connected to each other and two points C and D of the edge portions 6b and 6c are continuously connected to each other.

By employing such a constitution, the freedom of deformation in the vicinity of the end face 5 of the honeycomb structural body 10 for exhaust gas purification increases further. The thermal stress can be reduced. The crack formations caused by thermal shock can be prevented effectively. In this case, the length of the opening portion at the surface of the honeycomb outer wall 3 of each slit 4, in a direction parallel to the flow direction of exhaust gas [the central axis direction, that is, an X direction in Fig. 2(a)], is preferably 10% or more of the total length of the honeycomb structural body 10 for exhaust gas purification; and the length of the opening portion at the end face 5 of the slit is preferably 10% or more of the diameter of the honeycomb structural body 10 for exhaust gas purification.

As shown in Figs. 5(a) to 5(d), it is possible to form, at the intersection of slits 4, a portion (a connecting portion) 7 wherein no slit 4 is formed, so that the connecting portion 7 is located at the center of the honeycomb structural body 10 for exhaust gas purification and does not open at any of the surface, upper end face 5d and lower end face 5e of the honeycomb outer wall 3.

By employing this constitution, generation of cracks, etc. caused by thermal shock can be effectively prevented even when the honeycomb structural body 10 for exhaust gas purification is used in such an environment that extremely large non-uniformity of temperature extends in the whole portion (total length) of the honeycomb structural body 10.

Fig. 5(a) is a case wherein a sectional shape of the connecting portion 7 at a cross section of a slit-including plane, is rectangular; Fig. 5(b) is a case wherein the sectional shape is a circular; Fig. 5(c) is a case wherein the sectional shape is race-track-like; and Fig. 5(d) is a case wherein the sectional shape is rhombic. By employing such constitution, generation of cracks, etc. caused by thermal shock can be effectively prevented even when non-uniformity of temperature is large (for example, higher temperatures or lower temperatures are scattered locally) and this non-uniformity is distributed in the whole portion of honeycomb structural body.

Meanwhile, Figs. 6(a) to 6(d) are each a case wherein part of the connecting portion 7 opens at the lower end face 5f of the surface of the honeycomb outer wall 3.

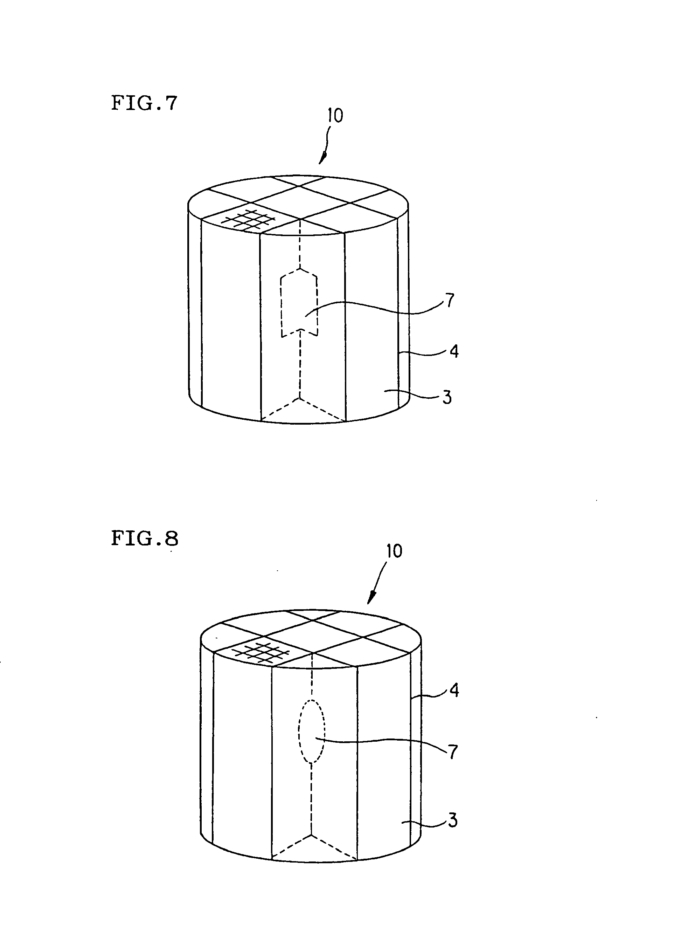

Fig. 7 and Fig. 8 are each other case wherein the connecting portion 7 is formed so as not to open at the surface of the honeycomb outer wall 3.

Fig. 7, similarly to Fig. 5(a), is a case wherein the sectional shape of the connecting portion 7 at a cross section of a slit-including plane, is a rectangle. In this case, the number of slits 4 is larger than that in Fig. 5(a).

Fig. 8 is case wherein the sectional shape of the connecting portion 7 at a cross section of a slit 4-including plane, is a circle or an oval.

In the slits 4, filler is preferred to be filled. As such filler, there can be mentioned, for example, a ceramic fiber, a ceramic powder and a cement, all having heat resistance. These materials can be used singly or in combination of two or more kinds. As necessary, it is possible to mix an organic binder, an inorganic binder, etc.

In the honeycomb structural body according to the present invention, and in such a cell section that the length of slit in diameter direction is largest at the cross section perpendicular to the flow direction of gas (the central axis direction), the length of slit in diameter direction is preferably 10% or more, more preferably 30% or more of the distance from honeycomb outer wall to central axis (that is radius).

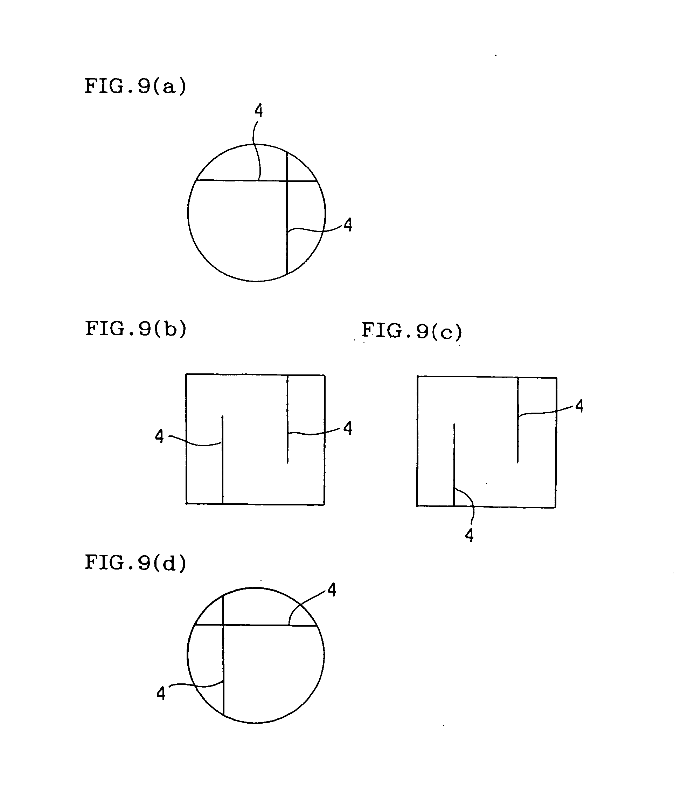

Also in the honeycomb structural body according to the present invention, slits are provided preferably in point symmetry in a honeycomb section perpendicular to the flow direction of exhaust gas (the central axis direction, i.e. the X direction) because it hardly gives deflection to the deformation of the whole structure; however, provision of slits is not restricted thereto. For example, slits 4 may be provided as shown in Figs. 9(a) to 9(d).

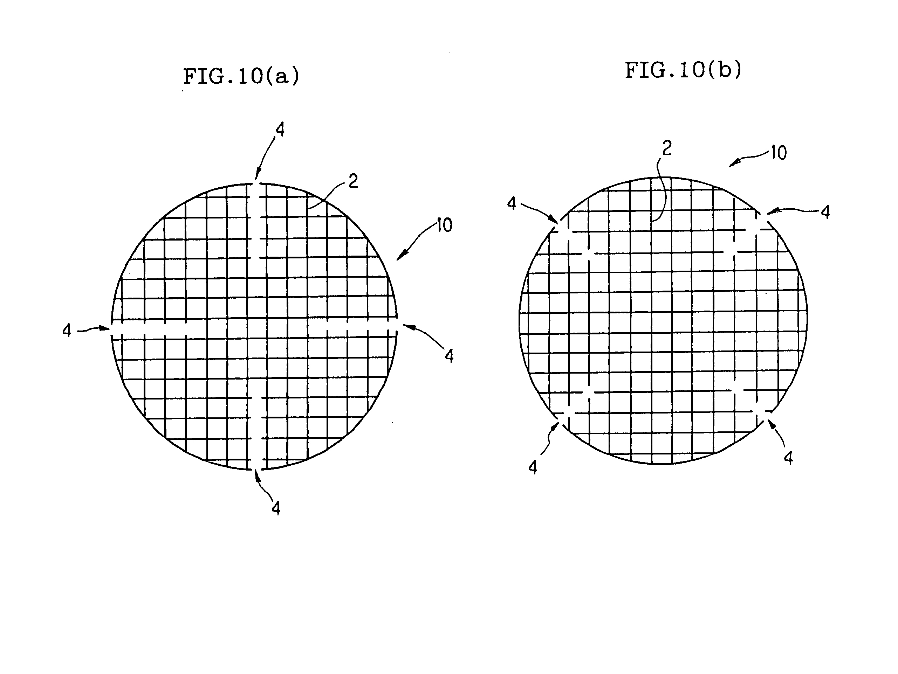

Slits 4 may be formed so as to cut cell partition walls 2 obliquely as shown in Fig. 10(b). However, formation of slits 4 in parallel to cell partition walls 2 as shown in Fig. 10(a) is more preferred because the stress concentration at the front end of slit 4 is small.

When the cells 1 of the honeycomb structural body 10 have a triangular shape, slits 4 are formed more preferably in a 60° or 120° direction for the same reason as above.

With respect to the width of slit 4, there is no particular restriction. However, too large a width invites increases in the number of steps for filling of filler and the amount of filler used and a decrease in the number of cells usable for purification of fluid (e.g. gas); therefore, the width of slit 4 is preferably smaller than the width of one cell.

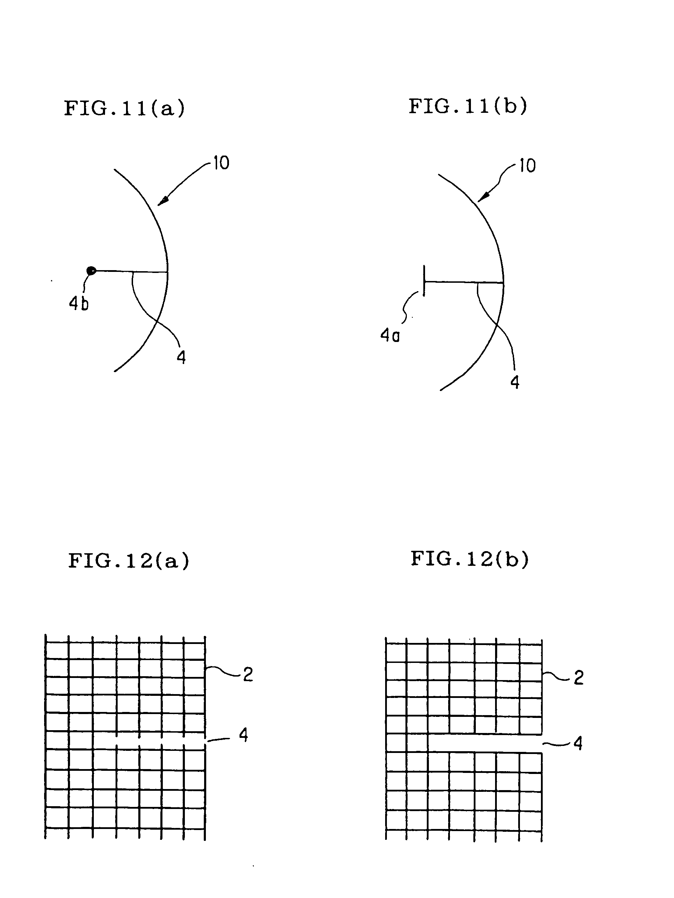

Further, it is more preferred to form, at the front end of slit 4, a branched portion 4a obtained by branching the slit 4 [see Fig. 11(b)] or a stress-relieving portion 4b having a radius of curvature [see Fig. 11(a)], from the standpoint of relief of thermal stress.

With respect to the form of slit 4, it may be a slit obtained by partially cutting the cell partition walls 2 of honeycomb structural body 10, as shown in Fig. 12(a), or a slit obtained by partially removing the cell partition walls 2, as shown in Fig. 12(b).

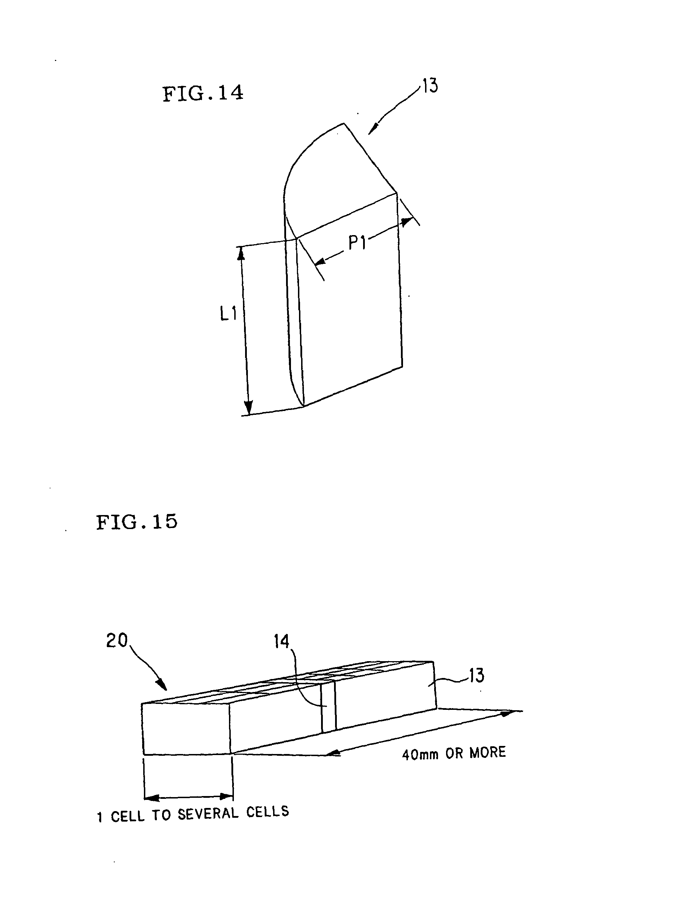

As the second example of the thermal stress-relieving means used in the honeycomb structural body 10, there can be mentioned such that the group of cells is divided into two or more first honeycomb segments at a plane parallel to the central axis of the group of cells (this division may be conducted by cutting after honeycomb production, or each segment itself may be produced in a shape same as that of divided segment), that the first segments are bonded to each other as necessary by a bonding layer 14, and that an aspect ratio [(L1)/(P1)] of each first honeycomb segment 13 between its length (L1) in the flow direction of exhaust gas (the central axis direction) and the diameter (one side) (P1) at the end face of the group of cells [the major diameter (major side) in the case of a sectional shape having deflection] satisfies a relation shown by the following expression (2). Here, the aspect ratio [(L1)/(P1)] of first honeycomb segment 13 between the length (L1) in the flow direction of exhaust gas (the central axis direction) and the diameter (one side) (P1), shown in Fig. 14 is preferred to satisfy a relation shown by the following expression (2):

$$2 \leqq [(L1)/(P1)] \leqq 10 \quad (2)$$

The aspect ratio [(L1)/(P1)] is preferably 10 or less from the standpoint of the strength and thermal shock resistance of segment per se. Meanwhile, when the aspect ratio is less than 2, the aspect ratio of the assembly when segments have been assembled is significantly deflected in the diameter direction; therefore, the aspect ratio of segment is preferred to be in the above range. A range of $3 \leqq [(L1)/(P1)] \leqq 6$ is more preferred. When there are first honeycomb segments of different shapes in the assembled honeycomb structural body, it is most preferred that all the segments satisfy the above expression (2); and it is necessary that at least the first honeycomb segments around the central axis (where thermal shock is largest) (they contain the central axis or are in contact with the central axis) satisfy the expression (2). The number of segments assembled is preferably 24 or less and, in view of the strength of the total assembly and the cost of production, more preferably 16 or less.

Hereinafter, more specific explanation is made on bonding of honeycomb segments.

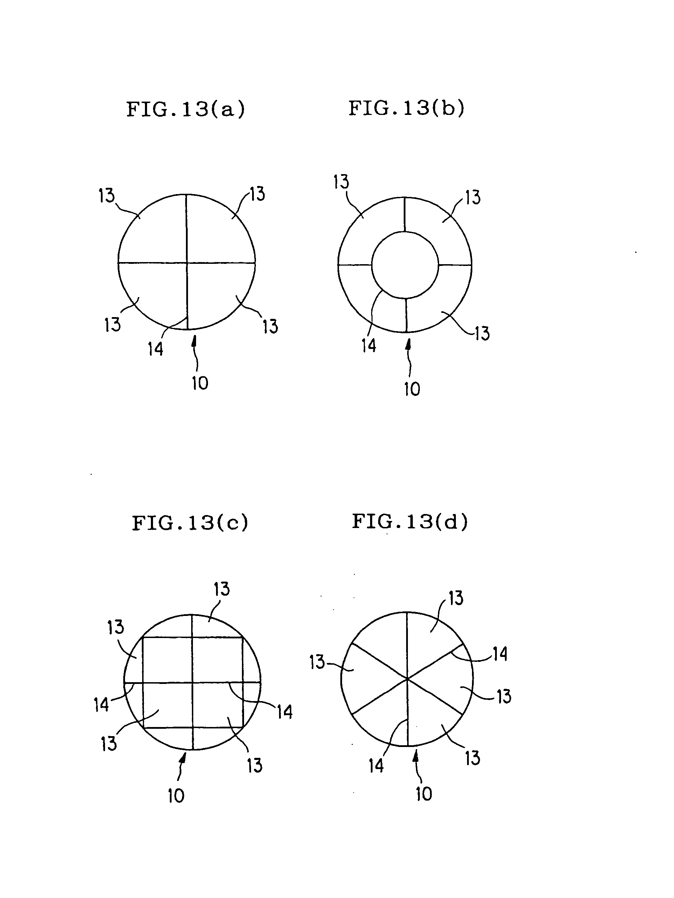

As shown in Figs. 13(a) to 13(d), the honeycomb structural body 10 for exhaust gas purification having the stress-relieving means is preferably divided into first honeycomb segments 13 in various division patterns.

When these honeycomb segments are bonded to each other, the Young's modulus of bonding layer 14 is made preferably 20% or less, more preferably 1% or less of the Young's modulus of the first honeycomb segment 13. Also, the material strength of bonding layer 14 is made preferably smaller than that of first honeycomb segment 13. By thus specifying the Young's moduli of bonding layer 14 and first honeycomb segment 13, it is possible to make small the thermal stress generated during use, effectively prevent the generation of cracks caused by thermal shock and obtain a structural body of superior durability. Further, even when the Young's modulus of bonding layer 14 is more than 20% of the Young's modulus of the first honeycomb segment 13 and yet when the material strength of bonding layer 14 is smaller than the material strength of the first honeycomb segment 13, cracks appear only in the bonding layer 14 and each first honeycomb segment 13 undergoes no damage.

Here, the Young's modulus of bonding layer 14 and the Young's modulus of the first honeycomb segment 13 mean the Young's moduli of respective materials per se and indicate the properties inherently possessed by the materials.

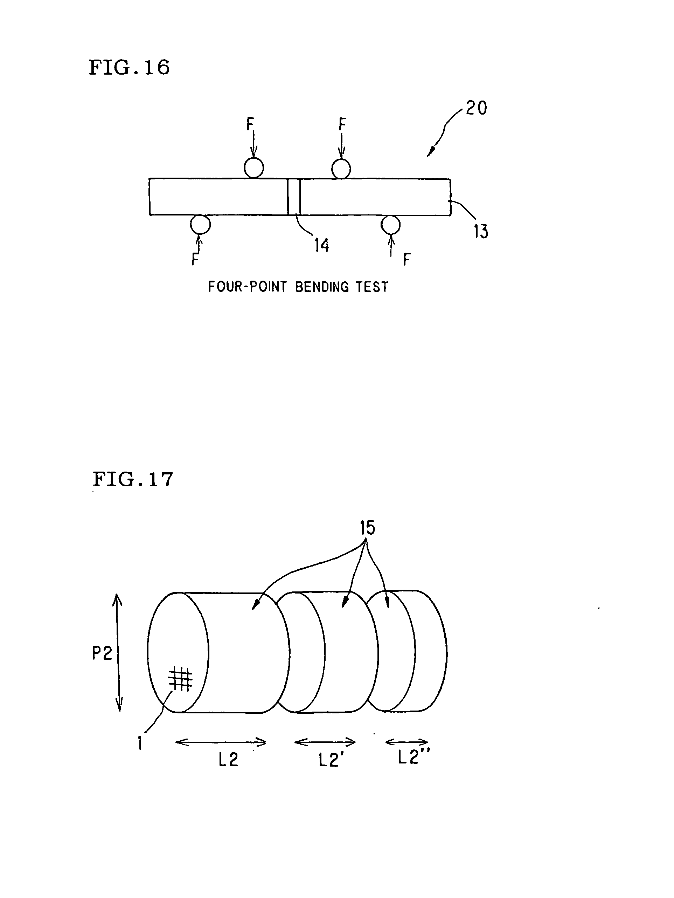

The meaning of the expression "the material strength of bonding layer is smaller than the material strength of the first honeycomb segment" is explained with reference to Fig. 15 and Fig. 16.

That is, a test piece 20 such as shown in Fig. 15 is prepared by cutting out from a honeycomb structural body for exhaust gas purification according to the present invention. Incidentally, the test piece 20 is cut so that it has a diameter direction length of 40 mm or more and a bonding layer 14 is located at the center.

In the present invention, when the test piece 20 is subjected to a four-point bending test (according to JIS R 1601) shown in Fig. 16 and the probability of breakage occurring inside bonding layer 14 or at interface between bonding layer 14 and the first honeycomb segment 13 is 50% or more, it is expressed as "the material strength of bonding layer is smaller than the material strength of the first honeycomb segment".

The average surface roughness (Ra) of at least 30% of the surface portion of the first honeycomb segment 13 contacting the bonding layer 14 is preferably more than 0.4 $\mu$m, more preferably 0.8 $\mu$m or more. By employing such constitution, the bonding between two or more first honeycomb segments 13 is strong and the peeling therebetween during use can be prevented effectively. Further, even when no bonding is made between segments, slippage between them can be prevented.

The proportion of the total heat capacity of all the bonding layers 14 in the honeycomb structural body 10 for exhaust gas purification according to the second aspect of the present invention, to the total heat capacity of all the first honeycomb segments 13 constituting the honeycomb structural body 10 for exhaust gas purification is preferably 30% or less, more preferably 15% or less.

By employing such constitution, it is possible to make short the time needed for temperature elevation, in an allowable range and activate the catalyst component at an early timing.

In the cross section of the honeycomb segment 13 parallel to its diameter direction, the sectional corner is preferred to be rounded in a radius of curvature of 0.2 mm or more or chamfered by 0.3 mm or more, because it can reduce generation of thermal stress during use, can prevent generation of cracks, and can impart durability.

In the cross section of the honeycomb structural body for exhaust gas purification parallel to its diameter direction, the proportion of ($S_s/S_h$) of the total sectional area ($S_s$) of the bonding layers 14 in the sectional area ($S_h$) of the honeycomb structural body for exhaust gas purification is preferably 17% or less, more preferably 8% or less from the standpoint of reduction in pressure loss of fluid.

Also in the second aspect of the present invention, in the cross section of the honeycomb structural body 10 for exhaust gas purification parallel to its diameter direction, the proportion ($S_s/S_c$) of the total sectional area ($S_s$) of the bonding layers to the total sectional area ($S_c$) of the partition walls of the cells group is preferably 50% or less, more preferably 24% or less from the standpoint of reduction in pressure loss of fluid.

Further in the cross section of the honeycomb structural body for exhaust gas purification parallel to its diameter direction, it is preferred that the proportion of the sectional area of the bonding layers to the sectional area of the cells group is large at the central portion and small at the honeycomb outer wall side. By employing such constitution, the flow of exhaust gas concentrating in the central portion can be appropriately dispersed toward the vicinity of the outer wall. Consequently, the temperature difference between the central portion and the honeycomb outer wall side can be reduced, and the thermal stress in the honeycomb structural body for exhaust gas purification can be reduced.

The shape of the cross section of the honeycomb structural body for exhaust gas purification at a plane perpendicular to the flow direction of exhaust gas, i.e. the sectional shape of honeycomb outer wall may be any of a circle, an oval or a race track shape, for example.

Here, as the material of the bonding layer used for bonding between the first honeycomb segments, there can be mentioned, for example, a ceramic fiber, a ceramic powder and a cement, all having heat resistance. These may be used singly or in combination of two or more kinds. It is possible to mix an organic binder or an inorganic binder, for example as necessary.

When the honeycomb segments have a sufficiently high strength, bonding between them can be omitted, for example, by assembling them as necessary via a ceramic fiber, a ceramic powder or a mat, for example, and pressing them from around for canning or providing a stopper at least at an exhaust gas outlet side for clamping.

As the third example of the thermal stress-relieving means used in the honeycomb structural body 10, there can be mentioned such as shown in Fig. 17 wherein a group of cells 1 is divided into two or more second honeycomb segments 15, that is, into multiple portions [ in Fig. 17, there is shown a case of three portions having lengths L2, L2' and L2" of exhaust gas flow direction (central axis direction)] at a plane perpendicular to the central axis of the cells 1 group and wherein an aspect ratio [(P2)/(L2)] of each second honeycomb segment 15 between its diameter (one side) [major diameter (major side) in case of sectional shape having deflection] (P2) and its length (L2) in exhaust gas flow direction (central axis direction) satisfies a relation shown by the following expression (3):

$$0.5 \leqq [(P2)/(L2)] \leqq 5 \quad (3)$$

Incidentally, the same applies also when the L2 of second honeycomb segment 15 is L2' or L2".

When at least one of the multiple second honeycomb segments satisfies the above expression (3), the effects of the present invention can be obtained. However, it is preferred that at least the second honeycomb segment provided most upstream and undergoing the largest thermal shock satisfies the expression (3), and it is most preferred that all of the second honeycomb segments satisfy the expression (3).

The aspect ratio [(P2)/(L2)] is preferably 5 or less from the standpoint of the strength and thermal shock resistance of the second honeycomb segments 15 per se. However, when the aspect ratio is less than 0.5 and when the second honeycomb segments 15 have been assembled, the aspect ratio of the resulting assembly is deflected significantly toward the flow direction of exhaust gas, resulting in increased pressure loss. Therefore, the above range is preferred and a range of $1.0 \leqq [(P2)/(L2)] \leqq 3$ is more preferred. As to the number of second honeycomb segments, 5 or less is preferred and 3 or less is more preferred, from the same reason of pressure loss. By employing such constitution, a reduction in thermal stress is possible; the divided second honeycomb segments 15 can be provided in any of various modes (they can be provided in contact with each other at their end faces, or at a certain distance apart from each other, or in respective cans); and bonding between segments may not be made.

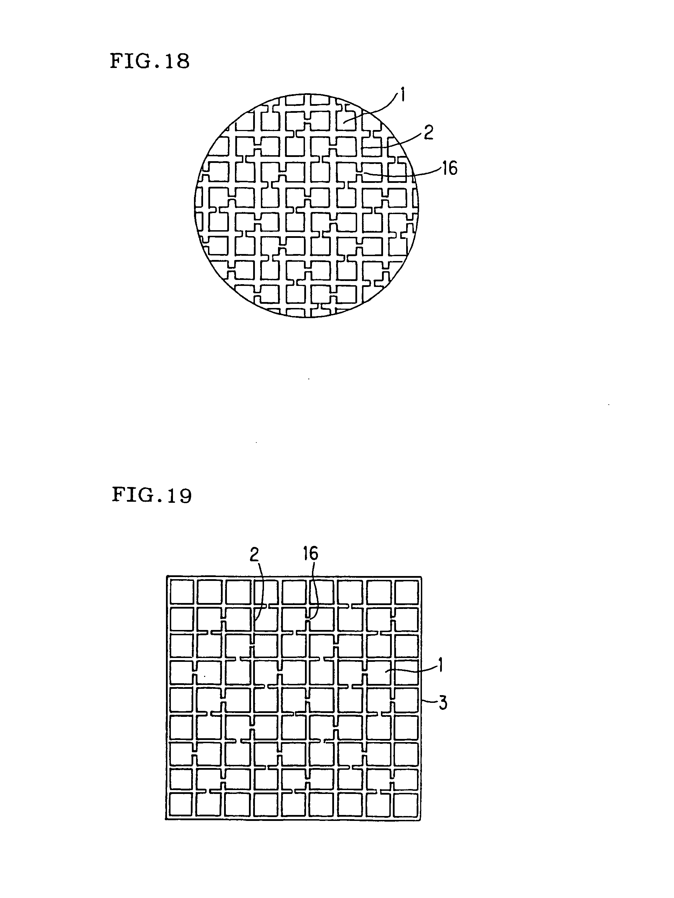

As the fourth example of the thermal stress-relieving means used in the honeycomb structural body 10, there can be mentioned at least one notch 16 provided in the cell partition walls 2 forming a group of cells 1, in the flow direction of exhaust gas (the central axis direction of the cells group), as shown in Fig. 18.

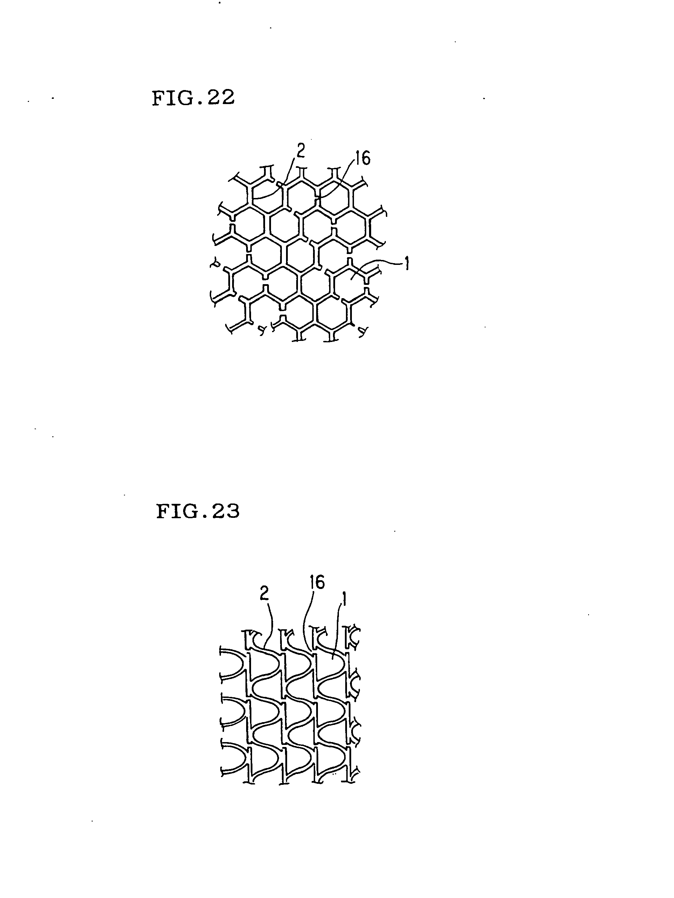

Examples of provision of the notch 16 are shown in Fig.18 to Fig. 23.

Each notch 16 in the honeycomb structural body is different from the above-mentioned slits open to outside, formed by cutting the honeycomb structural body from the honeycomb outer wall 3 toward the honeycomb diameter, and is provided substantially uniformly by cutting out predetermined portions of cells in the flow direction of exhaust gas (the central axis direction of honeycomb structural body).

Notches 16 may be provided separately from each other or continuously over plurality of cells, when a section of honeycomb structural body is viewed. The notches 16 relieve thermal stress. Unlike the above-mentioned slits, the notches 16 need not open at the honeycomb outer wall. Preferably, the notches 16 are basically provided so as to avoid continuity in one direction. However, when they are provided continuously in one direction, the number of continuity is preferably 10 cells or less. When they are formed in continuity of more than 10 cells in one direction, the strength of the whole honeycomb structural body may be significantly low. Also, when they are provided selectively in one direction, there may be deflection in the direction of release of thermal stress.

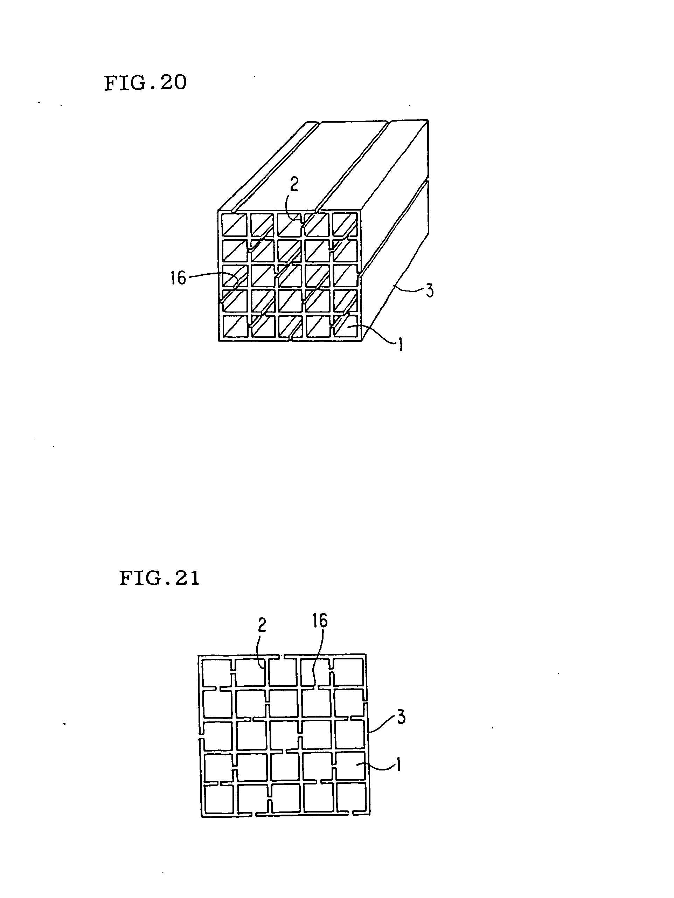

From the standpoint of strength, the number of notches 16 is preferably controlled at 40% or less of the number of total cell partition walls (the cell partition wall extending from one intersection to next intersection is counted as one cell partition wall). As to the depth of notch 16 in the flow direction of exhaust gas, there is basically no problem as long as the notches 16 are discontinuous at least at a certain section. However, it is preferred that the notches 16 open at the inlet side of honeycomb structural body in the flow direction of exhaust gas (the central axis direction of honeycomb structural body), which is high in thermal shock during actual use. When thermal shock resistance is required in the total length of cells in the flow direction of exhaust gas (the central axis direction), the notches 16 are preferably provided in the total length of cells in the flow direction of exhaust gas, as shown in Fig. 20.

The width of notch 16 is preferably not smaller than 10 $\mu$m and not larger than the width of one cell, independently of the thickness of cell partition wall and the cell pitch (distance between ribs). When the width of notch 16 is less than 10 $\mu$m, the effect of thermal stress relief may be insufficient; when the width is more than the width of one cell, the whole honeycomb structural body may be significantly low in strength.

The density of notches 16 may be changed in the diameter direction or in the flow direction of exhaust gas. Change of the density may be conducted for a single honeycomb structural body or for the above-mentioned division type. As a preferred example of the change of notch density, there can be mentioned concentrated formation of notches 16 in the central portion of diameter direction or inlet side of exhaust gas flow direction, where thermal shock is large during actual use.

As the fifth example of the thermal stress-relieving means used in the honeycomb structural body 10, there can be mentioned one formed by allowing each cell of the group of cells to have a sectional shape of tree or more cornered polygon.

A polygonal sectional shape having a large number of corners is preferred because it can reduce thermal stress. Specifically, an at least four cornered sectional shape is preferred, and a hexagonal sectional shape is more preferred. Of tetragons, rectangle is preferred to square for the same reason. Also, it is possible to change the cell shape in the diameter direction or in the flow direction of exhaust gas (change in the latter direction is possible only in the multiple portions type). Change in the diameter direction may be conducted for a single honeycomb structural body or for the above-mentioned division type. Change is preferably conducted, for example, by allowing the cell sectional shape to have a polygonal shape concentratedly in the central portion of diameter direction or inlet side of exhaust gas flow direction, where thermal shock is large during actual use.

It is preferred to change the thickness of cell partition wall in the diameter direction and/or the flow direction of exhaust gas (change in the latter direction is possible only in the multiple portions type), in view of the distribution of level of thermal shock in actual use. Change in the diameter direction may be conducted for a single honeycomb structural body or for the above-mentioned division type. Here, the change of the thickness of cell partition wall is generally conducted by allowing the central portion in the diameter direction or the vicinity of inlet in the flow direction of exhaust gas (at these portions, temperature elevation and cooling speeds are large) to have a larger thickness, because this is effective in prevention of crack generation caused by thermal shock.

Specifically, as the sixth example of the thermal stress-relieving means used in the honeycomb structural body 10, there can be mentioned such that the partition wall thickness ($T_{10}$) of the cells present in a portion extending from the central axis up to at least 10% of the radius (half of one side) satisfies a relation shown by the following expression (4) in relation to the basic cell partition wall thickness ($T_c$):

$$1.2 \leqq T_{10}/T_c \quad (4)$$

Also, increase of thickness of cell partition wall in the central portion in diameter direction or the vicinity of inlet in exhaust gas flow direction (central axis direction) not only reduces the temperature elevation and cooling speeds of the above portions but also makes small the temperature difference between these portions and the outer peripheral portion/the vicinity of outlet, which relieves thermal shock doubly.

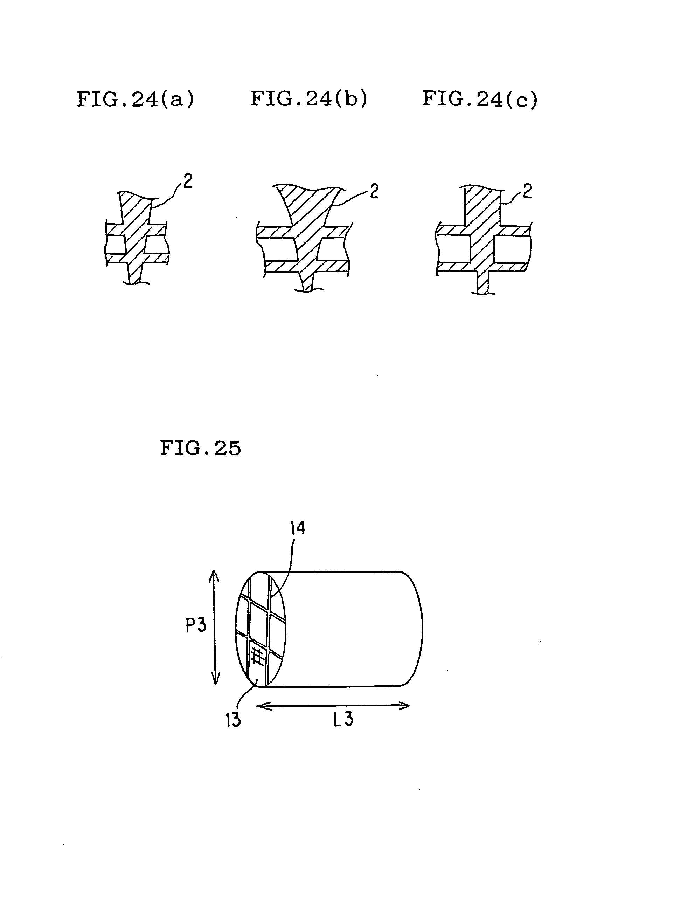

As shown in Fig. 24, when, in the honeycomb structural body there coexist portions different in the thickness of cell partition wall 2, in a cross section perpendicular to the central axis, it is preferred to change the thickness of cell partition wall 2 at the boundary between the portions, as shown in Fig. 24, so that the cell partition wall 2 has an inverse trapezoidal sectional shape [Fig. 24(a)], a spool-like sectional shape [Fig. 24(b)] or a rectangular sectional shape [Fig. 24(c)] and the rib thickness becomes gradually smaller from the thick-rib portion toward the thin-rib portion. By employing such constitution, improvements in pressure loss and ratio in thermal shock resistance can be achieved.

As the seventh example of the thermal stress-relieving means used in the honeycomb structural body 10, there can be mentioned one shown in Fig. 25, wherein an aspect ratio [(L3)/(P3)] between the total length (L3) of the cells group in the flow direction of exhaust gas (the axial direction of honeycomb structural body) and its diameter (one side) [major diameter (major side) in case of sectional shape having deflection] (P3) satisfies a relation shown by the following expression (5). By employing such constitution, improvements in strength and thermal shock resistance can be obtained. In Fig. 25, there is shown a case wherein a structural body is divided into honeycomb segments 13 and has bonding layers 14.

$$0.5 \leqq [(L3)/(P3)] \leqq 2 \quad (5)$$

The honeycomb structural body for exhaust gas purification having the stress-relieving means preferably has a weight of 1,500 g or less and a volume of 1,500 $cm^3$ or less.

The weight of one honeycomb structural body (in the case of single body, its weight and, in the case of division type, the weight of one segment) differs depending upon the material (thermal expansion coefficient and specific gravity) and the porosity; however, it is preferably at least 1,500 g or less from the standpoint of thermal shock resistance. When the weight is more than 1,500 g, there may appear damages such as cracks and the like in actual use even under relatively mild thermal shock of ordinary driving mode. The weight is more preferably 1,200 g or less, and a weight of 1,000 g or less is particularly preferred because it can withstand even a severe thermal shock caused by sharp temperature change.

The volume of one honeycomb structural body (in the case of single body, its volume and, in the case of division type, the weight of one segment) is preferably at least 1,500 $cm^3$ or less from the standpoint of thermal shock resistance. When the volume is more than 1,500 $cm^3$, there may appear damage in actual use even under relatively mild thermal shock of ordinary driving mode. The volume is more preferably 1,000 $cm^3$ or less, and a volume of 800 $cm^3$ or less is particularly preferred because it can withstand even a severe thermal shock caused by sharp temperature change.

In the present invention, a honeycomb structural body for exhaust gas purification having a higher effect of thermal stress relief can be obtained by appropriately combining the above-mentioned various means.

The main constituent material of the cell partition walls of the honeycomb structural bodies according to the present invention preferably contains, as the main component, a material which is superior in alkali resistance when the honeycomb structural body is used as a carrier for $NO_x$ occlusion catalyst and which further has such a strength and thermal resistance as can be applicable to the exhaust gas of automobile. Specifically, the main constituent material preferably contains at least one kind selected from the group consisting of alumina (of various kinds of alumina, $\alpha$-alumina is preferred because it has the highest alkali resistance), zirconia, titania, zeolite, SiC, SiN, mullite, lithium aluminum silicate (LAS), titanium phosphate, perovskite, spinel, chamotte, non-oriented cordierite (this means a cordierite wherein the crystals are not oriented; this non-oriented cordierite, because the crystals are not oriented, has a high thermal expansion coefficient as compared with oriented cordierite widely used as a carrier for catalyst for automobile exhaust gas) and mixtures or composites thereof. In particular, alumina, SiC, SiN, mullite, non-oriented cordierite, etc. are suitably used for the alkali resistance; among them, oxides are preferred one in view of the cost. While the cell partition walls are preferred to contain these materials as the main constituent material, the honeycomb outer wall as well is preferred to be constituted by the same material as for the cell partition walls.

The honeycomb structural body of the present invention exhibits its effects effectively when made of a material showing a thermal expansion coefficient of $1.0\text{x}10^{-6}/°C$ or more in a direction perpendicular to the flow direction of exhaust gas when used in an automobile exhaust gas (in this case, the material needs to have a high thermal expansivity). Particularly when the honeycomb structural body is made of a material having a high thermal expansion coefficient of $3.0\text{x}10^{-6}/°C$ or more and is mounted right downstream of manifold (where the temperature change of exhaust gas is large), the present invention is essential; when the honeycomb structural body is made of a material having a thermal expansion coefficient of $5.0\text{x}10^{-6}/°C$ or more, the present invention is necessary even when the honeycomb structural body is mounted below the floor of automobile (where the temperature change of exhaust gas is relatively small). Meanwhile, the present invention is applicable even to a material of having a small thermal expansion coefficient of less than $1.0\text{x}10^{-6}/°C$; however, the obtained improvement in thermal shock resistance is small because of the small thermal expansivity (high in thermal shock resistance) of the material.

With respect to the sectional shape of the honeycomb outer wall of the honeycomb structural bodies according to the present invention, there is no particular restriction as long as the sectional shape fits the internal shape of the exhaust gas system in which the honeycomb structural body is mounted. As the sectional shape, there can be mentioned, for example, a circle, an oval, an ellipse, a trapezoid, a triangle, a tetragon, a hexagon and a special shape wherein the left and right are unsymmetrical. Of these, a circle, an oval and an ellipse are preferred.

With respect to the cell structure of the honeycomb structures according to the present invention, the cell density is ordinarily 6 to 1,500 cpsi (cell number per square inch), preferably 300 to 1,200 cpsi, more preferably 400 to 900 cpsi. A cell density of more than 1,200 cpsi may result in strikingly high pressure loss when such a honeycomb structure is used for automobile exhaust gas. Meanwhile, with a cell density of less than 300 cpsi, a high GSA is unable to secure in a limited space for mounting of honeycomb structural body, which may result in shortage in efficiency of contact with exhaust gas.

The thickness of partition wall is ordinarily 20 to 2,000 $\mu$m, preferably 2 to 10 mil (mil is 1/1,000 inch), more preferably 2.5 to 8 mil. A partition wall thickness of more than 10 mil may result in striking pressure loss and striking reduction in warm-up property when such a honeycomb structural body as to the first or second aspect of the present invention is used for automobile exhaust gas. Meanwhile, a partition wall thickness of less than 2 mil may result in shortage in strength. A partition wall thickness of less than 20 $\mu$m may result in significant shortage in strength and consequent reduction in thermal shock resistance.

To provide the catalyst body for exhaust gas purification according to the present invention, in the above-mentioned honeycomb structural body for exhaust gas purification of the invention, a catalyst layer may be loaded on the cell partition walls or a catalyst is contained in the cell partition walls.

That is, the present catalyst body for exhaust gas purification may be suitably used for, for example, a NOx occlusion catalyst body wherein its catalyst layer or the catalyst contains an alkali metal and/or an alkaline earth metal. It is used particularly suitably for a NOx occlusion catalyst body containing K, Na, Li and Ca in a total amount of 5 g/L (honeycomb volume).

In this case, as the main constituent material of the cell partition walls of the honeycomb structural body for exhaust gas purification, there can be mentioned, for example, one containing at least one kind selected from the group consisting of alumina, zirconia, titania, zeolite, SiC, SiN, mullite, lithium aluminum silicate (LAS), titanium phosphate, perovskite, spinel, chamotte, non-oriented cordierite and mixtures or composites thereof.

Of these, alumina, SiC, mullite, non-oriented cordierite, or mixtures or composites thereof, are used suitably for their better alkali resistances.

As an application example of the catalyst body for exhaust gas purification according to the present invention, there can be mentioned, when the catalyst layer or the catalyst contains an alkali metal and/or an alkaline earth metal, a catalyst body for exhaust gas purification which contains, on the cell partition walls and/or in the cell partition walls, a substance (hereinafter may be referred to as anchor substance) capable of reacting with the alkali metal and/or the alkaline earth metal in preference to the reaction of the main constituent material of the cell partition walls with the alkali metal and/or the alkaline earth metal, in order to more reliably suppress the reaction between the carrier and the alkali metal and/or the alkaline earth metal.

As the anchor substance, there can be mentioned, for example, a substance containing at least one element selected from the group consisting of B, Al, Si, P, S, Cl, Ti, V, Cr, Mn, Ga, Ge, As, Se, Br, Zr, Mo, Sn, Sb, I and W.

It is preferred that specifically, a substance which is reactive with an alkali metal and/or an alkaline earth metal (each used as a catalyst component) and reacts with them in preference to the reaction of the main constituent material of honeycomb structural body with them, is allowed to coexist beforehand. By employing such a measure, the alkali metal and the alkaline earth metal in catalyst layer react with the anchor substance preferentially even when the catalyst body has been exposed to high temperatures during the use, and the reaction with the honeycomb structural body (carrier) is suppressed; as a result, the deterioration of the carrier can be suppressed more reliably.

For example, by loading the anchor substance on the carrier by impregnation or coating for example, prior to loading of a catalyst and then loading the catalyst, the anchor substance may be allowed to be present between the carrier and the catalyst layer, which can suppress the reaction between the carrier and the alkali metal and/or alkaline earth metal in catalyst layer most effectively.

As another example of the honeycomb catalyst body for exhaust gas purification according to the present invention, there can be mentioned a catalyst body for diesel exhaust gas purification wherein the catalyst layer or the catalyst is a SCR catalyst material having functions of the main catalyst and co-catalyst of SCR reaction or a function of the main catalyst or the co-catalyst.

In this case, as the SCR catalyst material, there can be mentioned, for example, one containing at least one kind selected from the group consisting of noble metals; V, VI, VII and VIII group transition metals; two or more kinds of compound oxides selected from rare earth element oxides such as $CeO_2$ and $La_2O_3$, or compound oxides between Zr and at least one kind selected from rare earth element oxides such as $CeO_2$ and $La_2O_3$; oxides of alkali metals such as Na and K; and oxides of alkaline earth metals such as Ba and Sr.

As the main constituent material of the cell partition walls of the honeycomb structural body for exhaust gas purification according to the present invention, there can be mentioned a material containing at least one kind selected from the group consisting of alumina, zirconia, titania, zeolite, SiC, SiN, mullite, lithium aluminum silicate (LAS), titanium phosphate, perovskite, spinel, chamotte, non-oriented cordierite and mixtures or composites thereof. Of these, oxides are a preferred material also for the cost.

The main constituent material of the cell partition walls of the honeycomb structural body for exhaust gas purification according to the present invention is preferred to contain, for example, at least one kind selected form the group consisting of $TiO_2$, zeolite, $Al_2O_3$ and compound oxides of two or more kinds thereof. The honeycomb outer wall as well is preferred to be made of the same material as for the cell partition walls. When a $SO_3$ component is present in the exhaust gas to be purified, $TiO_2$ is preferred in order to prevent the conversion of carrier into sulfate; however, there is no particular restriction when the concentration of $SO_3$ is low, for example, 50 ppm or less. As the $TiO_2$, anatase type is used ordinarily. Rutile type has a small specific surface area and its contribution to catalytic activity is not expectable.

As the zeolite, there can be used X type, Y type, ZSM-5 type or β type. However, it is important to minimize, as much as possible, the content of the alkali component from the standpoint of heat resistance. From the standpoint of heat resistance, it is preferred to control the $SiO_2/Al_2O_3$ ratio at 25 or more. There can so be suitably used AlPO, SAPO, metallosilicate and layer structure compounds. Those carriers obtained by loading thereon the above-mentioned catalyst active component by ion exchange can also be used suitably.

In the case of solid type, there are preferred, as the $Al_2O_3$, types of large surface area (other than α type) such as γ type, η type and the like.

The specific surface area of the honeycomb structural body (carrier) may be 10 to 500 $m^2/g$; however, it is preferred to be 150 $m^2/g$ or less in view of the strength and heat resistance of carrier.

As the kind of the noble metal, components such as Pt, Pd, Rh and the like can be mentioned. The content of the noble metal is preferably 0.17 to 7.07 g/L (honeycomb volume). As the base metal, V, VI, VII and VIII group transition metals can be mentioned.

As preferred examples of the catalyst composition used in the honeycomb structural body for exhaust gas purification according to the present invention, there can be mentioned noble metal (e.g. Pt)-loaded $TiO_2$ or $Al_2O_3$, noble metal (e.g. Pt)-loaded zeolite, metal (e.g. Cu, Fe or Ag)-loaded zeolite, non-noble metal (e.g. CuCr) loaded $TiO_2$ or $Al_2O_3$, and V-W-loaded $TiO_2$. V-W-$TiO_2$ type catalysts are superior in $SO_x$ resistance but, since they are easily lost due to abrasion, and the V (which is toxic) vaporizes easily at high temperatures, it may be difficult to use them in diesel vehicles. It is possible to further use, as a co-catalyst, rare earth element oxides such as $CeO_2$ or $La_2O_3$; compound oxides thereof; and compound oxides with Zr, As another co-catalyst, there may be suitably used oxides of alkali metals such as Na and K; and oxides of alkaline earth metals such as Ba and Sr.

In order for the honeycomb catalyst body for exhaust gas purification according to the present invention to be used in SCR containing urea, it is preferred that the cell partition walls load or contain a noble metal or a transition metal. The noble metal shows a high activity when the $SO_x$ content in diesel fuel is low (for example, 50 ppm or less).

In producing the honeycomb structural body for exhaust gas purification according to the present invention, it is possible that a carrier oxide such as $TiO_2$, $Al_2O_3$ and zeolite is molded into a honeycomb carrier and then a catalyst active component and a co-catalyst component are loaded on the carrier; alternatively, it is possible that an oxide mixture containing a carrier, a catalyst and a co-catalyst is molded into a honeycomb carrier.

For diesel exhaust gas purification, there are many cases using urea as a $NO_x$-reducing agent. In such cases, the present invention may be applied to a honeycomb catalyst which generates $NH_3$ by hydrolysis of urea or to a $NH_3$ slip decomposition catalyst provided downstream of a SCR catalyst.

As the cell shape of the honeycomb structure used in SCR catalyst, there can be mentioned, for example, one having 50 to 600 cells per square inch (50 to 600 cpsi). Since the SCR reaction is affected by the geographical surface area of honeycomb catalyst, less than 50 cells are unable to give a desired reaction activity; more than 600 cells may invite breakage owing to low thermal shock resistance. In honeycomb structures wherein no special means such as in the present invention are taken, 100 to 200 cells are an upper limit in automotive use, from the standpoint of thermal shock resistance; however, in the present invention, a honeycomb structural body of 300 cells or more can be used for automotive and accordingly a compact catalyst apparatus can be provided.

With respect to the thickness of cell partition wall, a wide range of (0.076 to 1.27 mm) (3 to 50 mil) is usable; however, a range of 0.76 to 0.254 mm (3 to 10 mil) is preferred in order to provide a compact reaction apparatus with low pressure loss.

The present invention is described more specifically below based on Examples. However, the present invention is in no way restricted by these Examples.

In the following Examples 1 to 9 according to the first aspect of the present invention and the following Comparative Examples 1 to 15 thereof, there were produced structural bodies 1 to 24 shown in Table 1, each using, as a material, titania A, B or C or alumina A, B or C (they were different from each other in material properties).

Example 1

As a raw material for cell partition wall, a kneaded raw material containing an alumina B raw material powder, water and a binder was used. The raw material was subjected to extrusion molding and the extrudate was fired to obtain a honeycomb structural body (structural body 1) which had a tetragonal cell shape, a diameter of 40 mm, a length of 40 mm, a cell partition wall (rib) thickness of 4 mil (0.102 mm), a cell density of 93 cells/cm$^2$ (600 cpsi) and a cell pitch of 1.037 mm. The alumina B had the following material properties: honeycomb thermal expansion coefficient ($\alpha$) in direction normal to flow direction of exhaust gas = $8.40 \times 10^{-6}$ [1/K], material specific heat (C) = 820 [J/kgK], material density ($\rho$) = 1,900 [kg/m$^3$], material thermal conductivity ($\lambda$) = 14 [W/mK], and material Young's modulus (one-rib bending) (E) = $40 \times 10^3$ [MPa]. These material properties and cell structure data are summarized in Table 1.

Table 1

| | Material | Structural body No. | Thermal expansivity B axis $\alpha$ (1/K) | Material Specific heat (J/kgK) | Material Density $\rho$ (kg/m³) | Material thermal conductivity $\lambda$ (W/mK) | Material Young's modulus B axis E (GPa) | Cell density (cpsi) | Rib thickness (mil) |
|---|---|---|---|---|---|---|---|---|---|
| Ex. 1 | Alumina-B | 1 | 8.40E-06 | 820 | 1900 | 14 | 40 | 600 | 4 |
| Ex. 2 | Alumina-C | 2 | 8.00E-06 | 820 | 1900 | 16 | 35 | 600 | 4 |
| Ex. 3 | Titania-A | 3 | 8.920E-06 | 800 | 2800 | 2.94 | 72 | 300 | 10 |
| Ex. 4 | Alumina-A | 4 | 8.40E-06 | 820 | 2700 | 20 | 95 | 300 | 10 |
| Ex. 5 | Alumina-B | 5 | 8.40E-06 | 820 | 1900 | 14 | 40 | 300 | 10 |
| Ex. 6 | Alumina-C | 6 | 8.00E-06 | 820 | 1900 | 16 | 35 | 300 | 10 |
| Ex. 7 | Alumina-A | 7 | 8.40E-06 | 820 | 2700 | 20 | 95 | 400 | 4 |
| Ex. 8 | Alumina-B | 8 | 8.40E-06 | 820 | 1900 | 14 | 40 | 400 | 4 |
| Ex. 9 | Alumina-C | 9 | 8.00E-06 | 820 | 1900 | 16 | 35 | 400 | 4 |
| Comp. Ex. 1 | Titania-A | 10 | 8.92E-06 | 800 | 2800 | 2.94 | 72 | 600 | 4 |
| Comp. Ex. 2 | Titania-B | 11 | 8.90E-06 | 800 | 1900 | 2.1 | 50 | 600 | 4 |
| Comp. Ex. 3 | Titania-C | 12 | 8.10E-06 | 800 | 2000 | 2.1 | 45 | 600 | 4 |
| Comp. Ex. 4 | Alumina-A | 13 | 8.40E-06 | 820 | 2700 | 20 | 95 | 600 | 4 |
| Comp. Ex. 5 | Titania-A | 14 | 8.92E-06 | 800 | 2800 | 2.94 | 72 | 900 | 2 |
| Comp. Ex. 6 | Titania-B | 15 | 8.90E-06 | 800 | 1900 | 2.1 | 50 | 900 | 2 |
| Comp. Ex. 7 | Titania-C | 16 | 8.10E-06 | 800 | 2000 | 2.1 | 45 | 900 | 2 |
| Comp. Ex. 8 | Alumina-A | 17 | 8.40E-06 | 820 | 2700 | 20 | 95 | 900 | 2 |
| Comp. Ex. 9 | Alumina-B | 18 | 8.40E-06 | 820 | 1900 | 14 | 40 | 900 | 2 |
| Comp. Ex. 10 | Alumina-C | 19 | 8.00E-06 | 820 | 1900 | 16 | 35 | 900 | 2 |
| Comp. Ex. 11 | Titania-B | 20 | 8.90E-06 | 800 | 1900 | 2.1 | 50 | 300 | 10 |
| Comp. Ex. 12 | Titania-C | 21 | 8.10E-06 | 800 | 2000 | 2.1 | 45 | 300 | 10 |
| Comp. Ex. 13 | Titania-A | 22 | 8.92E-06 | 800 | 2800 | 2.94 | 72 | 400 | 4 |
| Comp. Ex. 14 | Titania-B | 23 | 8.90E-06 | 800 | 1900 | 2.1 | 50 | 400 | 4 |

EP 1 419 816 B1

(continued)

|  | Material | Structural body No. | Thermal expansivity B axis $\alpha$ (1/K) | Material Specific heat (J/kgK) | Material Density $\rho$ (kg/m$^3$) | Material thermal conductivity $\lambda$ (W/mK) | Material Young's modulus B axis E (GPa) | Cell density (cpsi) | Rib thickness (mil) |
|---|---|---|---|---|---|---|---|---|---|
| Comp. Ex. 15 | Titania-C | 24 | 8.10E-06 | 800 | 2000 | 2.1 | 45 | 400 | 4 |

*1) B axis: a direction normal to flow direction
*2) 8.40E-06 indicates $8.40 \times 10^{-6}$.
*3) 100 cpsi = 15.5 cells/cm$^2$
*4) 1 mil = 0.0254 mm

Using the data shown in Table 1, each variation of the right side of the above-mentioned expression (1) was calculated for the structural body 1. As a result, the geographical surface area (GSA) per honeycomb volume was $3.48 \times 10^3$ [$m^2/m^3$]; the honeycomb cell hydraulic diameter ($H_D$) was 0.000935 [m]; the cell heat capacity (c) was 290347.6 [$J/m^3K$]; and the honeycomb cell thermal conductivity ($\lambda_c$) was 1.371714 [W/mK]. The expressions used for calculation were shown in the following expressions (15) to (19).

$$GSA \ [m^2/m^3] = 4\times\{cell \ pitch \ [m] - rib \ thickness \ [m]\}/(0.0254)^2 \times cell \ density \ [cpsi] \qquad (15)$$

$$H_D \ [m] = cell \ pitch \ [m] - rib \ thickness \ [m] \qquad (16)$$

$$\rho_c \ [kg/m^3] = material \ density \ [kg/m^3] \times \{1-(cell \ pitch \ [m] -rib \ thickness \ [m])^2/(cell \ pitch \ [m])^2\} \qquad (17)$$

$$Cell \ heat \ capacity \ [J/m^3K] = material \ specific \ heat \ [J/kgK] \times honeycomb \ structure \ bulk \ density \ [kg/m^3] \qquad (18)$$

$$Honeycomb \ cell \ thermal \ conductivity \ [W/mK] = material \ thermal \ conductivity \ [W/mK] \times rib \ thickness \ [m]/cell \ pitch \ [m] \qquad (19)$$

Incidentally, as mentioned above, with respect to the representative time $t_o$ and representative length L for determining CI, $\lambda_g = 0.061$ W/mK and Nu = 3.77 were assumed and L = 0.04 m, $t_o = 5$ sec and $\Delta T = 500$ K were selected. As a result, CI = $1.61 \times 10^{-2}$ was obtained and employed. Using the expression (1), the variables of its right side were calculated for each of the structural bodies of Examples 1 to 9 and Comparative Examples 1 to 15. The results are summarized in Table 2.

Table 2

| | Cell pitch (m) | Rib thickness (m) | Bulk density (kg/m³) | Cell heat capacity c (J/m³K) | Cell thermal conductivity (W/mK) | Hydraulic diameter $H_D$ (m) | GSA (m²/m³) | Right side of expression (1) material strength/ Young's s modulus critical |
|---|---|---|---|---|---|---|---|---|
| Ex. 1 | 0.001037 | 0.0001016 | 354.08244 | 290347.6 | 1.37171426 | 0.0009354 | 3.48E+03 | 8.00E-04 |
| Ex.2 | 0.001037 | 0.0001016 | 354.0824 | 290347.6 | 1.56767344 | 0.0009354 | 3.48E+03 | 7.12E+04 |
| Ex.3 | 0.0014665 | 0.000254 | 885.94845 | 708758.76 | 0.50922294 | 0.0012125 | 2.26E+03 | 4.46E+04 |
| Ex.4 | 0.0014665 | 0.000254 | 854.30744 | 700532.1 | 3.46410162 | 0.0012125 | 2.26E+03 | 1.62E+04 |
| Ex.5 | 0.0014665 | 0.000254 | 601.17931 | 492967.03 | 2.42487113 | 0.0012125 | 2.26E+03 | 2.31E+04 |
| Ex.6 | 0.0014665 | 0.000254 | 601.17931 | 492967.03 | 2.77128129 | 0.0012125 | 2.26E+03 | 2.06E+04 |
| Ex.7 | 0.00127 | 0.0001016 | 414.72 | 340070.4 | 1.6 | 0.0011684 | 2.90E+03 | 4.56E+04 |
| Ex.8 | 0.00127 | 0.0001016 | 291.84 | 239308.8 | 1.12 | 0.0011684 | 2.90E+03 | 6.50E+04 |
| Ex.9 | 0.00127 | 0.0001016 | 291.84 | 239803.8 | 1.28 | 0.0011684 | 2.90E+03 | 5.79E+04 |
| Comp. Ex. 1 | 0.001037 | 0.0001016 | 521.8057 | 417444.56 | 0.28805999 | 0.0009354 | 3.48E+03 | 1.55E+03 |
| Comp. Ex. 2 | 0.001037 | 0.0001016 | 354.08244 | 283265.95 | 0.20575714 | 0.0009354 | 3.48E+03 | 2.21E+03 |
| Comp. Ex. 3 | 0.001037 | 0.0001016 | 372.71836 | 298174.69 | 0.20575714 | 0.0009354 | 3.48E+03 | 1.96E+03 |
| Comp. Ex. 4 | 0.001037 | 0.0001016 | 503.16978 | 412599.22 | 1.95959179 | 0.0009354 | 3.48E+03 | 5.61E+03 |
| Comp. Ex. 5 | 0.0008467 | 0.0000508 | 325.92 | 260736 | 0.1764 | 0.0007959 | 4.44E+03 | 3.75E+03 |
| Comp. Ex. 6 | 0.0008467 | 0.0000508 | 221.16 | 176928 | 0.126 | 0.0007959 | 4.44E+03 | 5.37E+03 |
| Comp. Ex. 7 | 0.0008467 | 0.0000508 | 232.8 | 186240 | 0.126 | 0.0007959 | 4.44E+03 | 4.76E+03 |
| Comp. Ex. 8 | 0.0008467 | 0.0000508 | 314.28 | 257709.6 | 1.2 | 0.0007959 | 4.44E+03 | 1.36E+03 |
| Comp. Ex. 9 | 0.0008467 | 0.0000508 | 221.16 | 181351.2 | 0.84 | 0.0007959 | 4.44E+03 | 1.94E+03 |
| Comp. Ex. 10 | 0.0008467 | 0.0000508 | 221.16 | 181351.2 | 0.96 | 0.0007959 | 4.44E+03 | 1.73E+03 |
| Comp. Ex. 11 | 0.0014665 | 0.000254 | 601.17931 | 480943.45 | 0.36373067 | 0.0012125 | 2.26E+03 | 6.39E+03 |
| Comp. Ex. 12 | 0.0014665 | 0.000254 | 632.82032 | 506256.26 | 0.36373067 | 0.0012125 | 2.26E+03 | 5.67E+03 |

(continued)

| | Cell pitch (m) | Rib thickness (m) | Bulk density (kg/m$^3$) | Cell heat capacity c (J/m$^3$K) | Cell thermal conductivity (W/mK) | Hydraulic diameter H$_D$ (m) | GSA (m$^2$/m$^3$) | Right side of expression (1) material strength/ Young's s modulus critical |
|---|---|---|---|---|---|---|---|---|
| Comp. Ex. 13 | 0.00127 | 0.0001016 | 430.08 | 344064 | 0.2352 | 0.0011684 | 2.90E+03 | 1.26E+03 |
| Comp. Ex. 14 | 0.00127 | 0.0001016 | 291.84 | 233472 | 0.168 | 0.0011684 | 2.90E+03 | 1.80E+03 |
| Comp. Ex. 15 | 0.00127 | 0.0001016 | 307.2 | 245760 | 0.168 | 0.0011684 | 2.90E+03 | 1.60E+03 |
| * 3.48E+03 indicates 3.48x10$^3$. | | | | | | | | |

Further, the right side of the expression (1) was calculated using the values of Table 2. As a result, $8.00 \times 10^{-4}$ was obtained as the right side. Meanwhile, one rib was cut out from the produced structural body 1 and its material strength was measured, which was 35 [MPa]. It was divided by the material Young's modulus (one-rib bending) to obtain $8.75 \times 10^{-4}$ as the left side. Therefore, it is appreciated that this structural body 1 satisfies the expression (1). The above results are summarized in Table 3. Incidentally, in Table 3, a case when the structural body satisfied the expression (1), was indicated as ○; and a case when the structural body did not satisfy the expression (1), was indicated as X.

Also, in order to evaluate the heat resistance of the obtained structural body 1, the following heat cycle test using a gas burner was conducted. That is, a sample of 40 mm in diameter and 40 mm in length was cut out from the structural body 1. A cold air and a hot air fed from a gas burner were passed through the sample alternately by switching them using a three-way valve. In this manner, a cycle consisting of heating [10 minutes at 900˚C (gas temperature at sample inlet side)] and cooling [10 minutes at 200˚C (gas temperature at sample inlet side)] was repeated 100 times (100 cycles). Then, generation of cracks in the sample was observed visually. The results are shown in Table 3. Incidentally, in Table 3, a case when no cracks were seen in the structural body, was indicated as ○; and a case when cracks were seen, was indicated as X.

Examples 2 to 9 and Comparative Examples 1 to 15

Structural bodies 2 to 24 were produced in the same manner as in Example 1 except that the material of cell partition wall and the cell structure were changed to those shown in Table 1. For the obtained structural bodies 2 to 24, the variables of the right side of the expression (1) were calculated using the data shown in Table 1. The results are shown in Table 2. Further, the calculation results of the right side of the expression (1) using the values of Table 2, the measured value of material strength, the value of the left side obtained by dividing the measured value of the material strength by material Young's modulus (one-rib bending), whether or not the value of the left side satisfies the expression (1), and generation of cracks in sample in heat cycle test using burner are summarized in Table 3.

Table 3

|  | Material strength (measured) (MPa) | Left side of Expression (1) Material strength (measured)/ Young's modulus | Right side of expression (1) Material strength/ Young's modulus Critical | Whether or not expression (1) is satisfied | Heat cycle test using gas burner (generation of cracks) |
|---|---|---|---|---|---|
| Ex. 1 | 35 | 0.000875 | 8.00E-04 | ○ | ○ |
| Ex. 2 | 42 | 0.0012 | 7.12E-04 | ○ | ○ |
| Ex. 3 | 35 | 0.000486111 | 4.46E-04 | ○ | ○ |
| Ex. 4 | 50 | 0.000526316 | 1.62E-04 | ○ | ○ |
| Ex. 5 | 35 | 0.000875 | 2.31E-04 | ○ | ○ |
| Ex. 6 | 42 | 0.0012 | 2.06E-04 | ○ | ○ |
| Ex. 7 | 50 | 0.000526316 | 4.56E-04 | ○ | ○ |
| Ex. 8 | 35 | 0.000875 | 6.50E-04 | ○ | ○ |
| Ex. 9 | 42 | 0.0012 | 5.79E-04 | ○ | ○ |
| Comp. Ex. 1 | 35 | 0.000486111 | 1.55E-03 | x | x |
| Comp. Ex. 2 | 25 | 0.0005 | 2.21E-03 | x | x |
| Comp. Ex. 3 | 20 | 0.000444444 | 1.96E-03 | x | x |
| Comp. Ex. 4 | 50 | 0.000526316 | 5.61E-03 | x | x |
| Comp. Ex. 5 | 35 | 0.000486111 | 3.75E-03 | x | x |
| Comp. Ex. 6 | 25 | 0.0005 | 5.37E-03 | x | x |
| Comp. Ex. 7 | 20 | 0.000444444 | 4.76E-03 | x | x |

(continued)

| | Material strength (measured) (MPa) | Left side of Expression (1) Material strength (measured)/ Young's modulus | Right side of expression (1) Material strength/ Young's modulus Critical | Whether or not expression (1) is satisfied | Heat cycle test using gas burner (generation of cracks) |
|---|---|---|---|---|---|
| Comp. Ex. 8 | 50 | 0.000526316 | 1.36E-03 | x | x |
| Comp. Ex. 9 | 35 | 0.000875 | 1.94E-03 | x | x |
| Comp. Ex. 10 | 42 | 0.0012 | 1.73E-03 | x | x |
| Comp. Ex. 11 | 25 | 0.0005 | 6.39E-03 | x | x |
| Comp. Ex. 12 | 20 | 0.000444444 | 5.67E-03 | x | x |
| Comp. Ex. 13 | 35 | 0.000486111 | 1.26E-03 | x | x |
| Comp. Ex. 14 | 25 | 0.0005 | 1.80E-03 | x | x |
| Comp. Ex. 15 | 20 | 0.000444444 | 1.60E-03 | x | x |
| * 8.00E-04 indicates $8.00 \times 10^{-4}$. | | | | | |

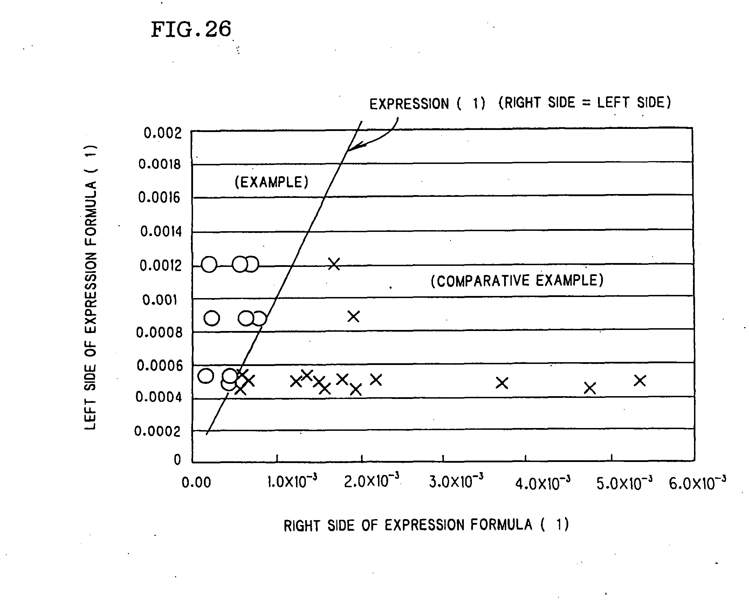

Fig. 26 is a graph indicating that the structural bodies obtained in Examples of the present invention [the structural bodies satisfying the expression (1)] show no generation of cracks and the structural bodies obtained in Comparative Examples [the structural bodies not satisfying the expression (1)] show generation of cracks. As indicated in Fig. 26, the structural bodies satisfying the expression (1) (Examples 1 to 9) and the structural bodies not satisfying the expression (1) (Comparative Examples 1 to 15) are divided into two territories by a straight line of the expression (1) in which equal mark "=" is taken. It is appreciated that these two territories agree respectively with the area showing no generation of cracks and the area showing generation of cracks.

In the following Examples 10 to 21 according to the present invention having thermal stress-relieving means, structural bodies 25 to 36 shown in Table 4 to Table 7 were produced using, as a material, alumina C, titania A or titania B.

Example 10

A structural body 25 having an outer shape of 100 mm in diameter, 100 mm in length and 101.6 $\mu$m in partition wall thickness, and a cell density of 93 cells/cm$^2$ (400 cpsi) was produced using alumina C, in the same manner as in Example 1. In this structural body were formed slits 4 so as to have a shape shown in Fig. 2(d). Incidentally, the shape of each slit 4 in Fig. 2(d) was such that the length of slit 4 exposed at the upper end face 14 of honeycomb structural body 10 was 3/10 (specifically 30 mm) of the diameter of honeycomb structural body 10 and that the length of slit 4 exposed at the honeycomb outer wall in central axis direction was 100 mm (the total length of honeycomb outer wall). The structural body 25 obtained had a volume of 785 cm$^3$ and a weight of 270 g. The structural body 25 was subjected to a thermal shock resistance test in an electric oven. As a result, the breakage temperature was 800˚C (no crack generated up to 750 ˚C), which is very good. The above results are summarized in Table 4.

Thermal shock resistance test by electric oven

A sample of room temperature was placed in an electric oven kept at 400˚C. After 20 minutes, the sample was taken out and cooled to room temperature. Then, generation of cracks was examined visually. When there was no cracks, the temperature of the electric oven was elevated at intervals of 50˚C to repeat the same test. The temperature at which cracks generated first, was taken as "breakage temperature".

Examples 11 to 13

Structural bodies 26 to 28 were produced in the same manner as in Example 10 except that the outer shape, cell density and slit shape of Example 10 were changed as shown in Table 4. The results thereof and the results of thermal shock resistance test are summarized in Table 4.

Table 4

| | Material | Structural body No. | Cell structure | Thermal stress-relieving means | Aspect ratio (L3)/(P3) | External form | Honeycomb volume | Honeycomb weight | Breakage temperature (˚C) |
|---|---|---|---|---|---|---|---|---|---|
| Ex. 10 | Alumina-C | 25 | 4/400 | Slit | 1.0 | φ 100 mmx100 mm L Slit depth: 30 mm from outer periphery Slit width: 1 cell | 785 cc | 270 g | 800 |
| Ex. 11 | Alumina-C | 26 | 10/300 | Slit | 1.0 | φ 150 mmx150 mm L Slit depth: 42 mm from outer periphery Slit width: 1 cell | 2651 cc | 1680 g | 700 |
| Ex. 12 | Alumina-C | 27 | 4/400 | Slit | 1.0 | φ 130 mmx130 mm L Slit depth: 39 mm from outer periphery Slit width: 1 cell | 1726 cc | 560 g | 750 |
| Ex. 13 | Titania-A | 28 | 10/300 | Slit | 1.0 | φ 100 mmx100 mm L Slit depth: 30 mm from outer periphery Slit width: 1 cell | 785 cc | 760 g | 750 |

EP 1 419 816 B1

Example 14

A structural body 29 having an outer shape of 100 mm in diameter, 100 mm in length and 101.6 μm in partition wall thickness, and a cell density of 93 cells/cm$^2$ (400 cpsi) was produced using alumina C, in the same manner as in Example 1. This structural body 29 was allowed to have a structure shown in Fig. 13(c), wherein four first segments 13 having a square section (one side: 35 mm) and a length of 100 mm and eight first segments having a special shape (major side of section: 35 mm, length: 100 mm), surrounding the first segments 13 were assembled and bonded by a cement. The structural body 29 obtained had a volume of 785 cm$^3$ and a weight (excluding the cement) of 270 g. The first segments 13 each had an aspect ratio [(L1)/(P1)] of 100/35 = 2.86. The structural body 29 was subjected to a thermal shock resistance test in an electric oven. As a result, the breakage temperature was 800˚C, which is very good. The above results are summarized in Table 5.

Examples 15 to 16

Structural bodies 30 to 31 were produced in the same manner as in Example 14 except that the material, outer shape, cell density and structures of first segments of Example 14 were changed as shown in Table 5. The results thereof and the results of thermal shock resistance test are summarized in Table 5.

Table 5

| | Material | Structural body No. | Cell structure | Thermal Stress-Relieving Means | Aspect ratio [(L1) / (P1)] | Aspect ratio [(L3) / (P3)] | External form | Honeycomb volume | Honeycomb weight | Breakage temperature (°C) |
|---|---|---|---|---|---|---|---|---|---|---|
| Ex. 14 | Alumina-C | 29 | 4/400 | Division and bonding | 2.86 | 1.0 | φ 100 mmx100 mm L Segments of 35 mmx35 mmx100 mm L were bonded by a cement. | 785 cc | 270 g (excluding cement portion) | 800 |
| Ex.15 | Alumina-C | 30 | 4/400 | Division and bonding | 12.5 | 1.0 | φ 100mmx100mmL Segments of 8 mmx8 mmx100 mm L were bonded by a cement. | 785 cc | 270 g (excluding cement portion) | 650 |
| Ex. 16 | Titania-A | 31 | 10/300 | Division and bonding | 2.86 | 1.0 | φ 100 mmx100 mm L Segments of 35 mmx35 mmx100 mm L were bonded by a cement. | 785 cc | 760 g (excluding cement portion) | 750 |

EP 1 419 816 B1

Example 17

There was produced, using alumina C and in the same manner as in Example 1, a structural body 32 having an outer shape of 100 mm in diameter, 120 mm (including gaps) in length and 101.6 $\mu$m in partition wall thickness, and a cell density of 93 cells/cm$^2$ (400 cpsi), so as to have a shape constituted by dividing into three stages of second honeycomb segments. This structural body 32 had such a structure as a second segment 15 having a shape shown in Fig. 17 and a length of 33.3 mm was cumulated in three stages. The structural body 32 obtained had a volume of 785 cm$^3$ and a weight of 270 g. The second segments 15 each had an aspect ratio [(P2)/(L2)] of 100/33.3= 3.00. The structural body 32 was subjected to a thermal shock resistance test in an electric oven. As a result, the breakage temperature was 800°C, which is very good. The above results are summarized in Table 6.

Examples 18 to 19

Structural bodies 33 to 34 were produced in the same manner as in Example 17 except that the material, outer shape, cell density and structures of second segments of Example 17 were changed as shown in Table 6. The results thereof and the results of thermal shock resistance test are summarized in Table 6.

Table 6

| | Material | Structural body No. | Cell structure | Thermal Stress-Relieving Means | Aspect ratio [(P2)/ / (L2)] | Aspect ratio [(L3) / (P3)] | External form | Honeycomb volume | Honeycomb weight | Breakage temperature (˚C) |
|---|---|---|---|---|---|---|---|---|---|---|
| Ex. 17 | Alumina-C | 32 | 4/400 | Multiple stages | 3.0 | 1.2 | φ 100 mmx120 mm L (including gaps) A segment of φ 100 mmx33.3 mm L was arranged in three stages with 10 mm apart from each other. The position of each segment was fixed by canning. | 785 cc | 270 g | 800 |

EP 1 419 816 B1

(continued)

| | Material | Structural body No. | Cell structure | Thermal Stress-Relieving Means | Aspect ratio [(P2)/(L2)] | Aspect ratio [(L3)/(P3)] | External form | Honeycomb volume | Honeycomb weight | Breakage temperature (°C) |
|---|---|---|---|---|---|---|---|---|---|---|
| Ex. 18 | Alumina-C | 33 | 4/400 | Multiple stages | 6.0 | 1.25 | φ 100 mm×125 mm L (including gaps) A segment of φ 100 mm×16.7 mm L was arranged in six stages with 5 mm apart from each other. The position of each segment was fixed by canning. | 785 cc | 270 g | 650 |

| | Material | Structural body No. | Cell structure | Thermal Stress-Relieving Means | Aspect ratio [(P2)/ / (L2)] | Aspect ratio [(L3) / (P3)] | External form | Honeycomb volume | Honeycomb weight | Breakage temperature (°C) |
|---|---|---|---|---|---|---|---|---|---|---|
| Ex. 19 | Titania-A | 34 | 10/300 | Multiple stages | 3.0 | 1.2 | φ 100 mmx120 mm L (including gaps) A segment of 100 mmx33.3 mm L was arranged in three stages with 10 mm apart from each other. The position of each segment was fixed by canning. | 785 cc | 760 g | 750 |

EP 1 419 816 B1

30

Example 20

There was produced, using alumina C and in the same manner as in Example 1, a structural body 35 having an outer shape of 100 mm in diameter, 100 mm in length and 101.6 μm in partition wall thickness and a cell density of 93 cells/cm$^2$ (400 cpsi), which had at least one notch in the cell partition walls in the flow direction of exhaust gas (the central axis direction of the structural body). This structural body 35 had a shape shown in Fig. 18 and had at least one notch 16. The structural body 35 obtained had a volume of 785 cm$^3$ and a weight of 270 g. The structural body 35 was subjected to a thermal shock resistance test in an electric oven. As a result, the breakage temperature was 750˚C, which is very good. The above results are summarized in Table 7.

Example 21

A structural body 36 was produced in the same manner as in Example 20 except that the material, outer shape and cell density of Example 20 were changed as shown in Table 7. The results thereof and the results of thermal shock resistance test are summarized in Table 7.

Table 7

| | Material | Structural body No. | Cell structure | Thermal stress-relieving means | Aspect ratio (L3)/(P3) | External form | Honeycomb volume | Honeycomb weight | Breakage temperature (°C) |
|---|---|---|---|---|---|---|---|---|---|
| Ex. 20 | Alumina-C | 35 | 4/400 | Notch | 1.0 | φ100 mmx100 mmL | 785 cc | 270 g | 750 |
| Ex. 21 | Titania-A | 36 | 10/300 | Notch | 1.0 | φ100 mmx100 mmL | 785 cc | 760 g | 700 |

Industrial Applicability

As described above, the present invention can provide a honeycomb structural body for exhaust gas purification and a honeycomb catalyst body for exhaust gas purification, both of which have a sufficient thermal shock resistance as a honeycomb structural body and which can be used for long term even when made of a material having a larger thermal expansion coefficient ($\alpha \geqq 1 \times 10^{-6}$) and smaller thermal shock resistance but having better resistance to alkali metals and alkaline earth metals compared with cordierite widely used for purification of automobile exhaust gas.

**Claims**

1. A honeycomb structural body for exhaust gas purification, which comprises,
   a plurality of cell partition walls (ribs) forming a group of cells adjacent to each other, and
   a honeycomb outer wall surrounding and holding the group of cells, wherein an exhaust gas flowing through the cells is purified by a catalyst layer to be loaded on the cell partition walls or by a catalyst to be contained in the cell partition walls,
   **characterized in that** the cell partition walls satisfy a relation shown by the following expression (1), with respect to the material properties and the cell structure:

$$\sigma / E \geqq 0.0161 \cdot \alpha \cdot (GSA) / \{ H_D \cdot ( \rho_c \cdot C \cdot \lambda_c )^{0.5} \} \qquad (1)$$

   {in the expression (1), $\sigma$ [MPa] is a material strength (one-rib bending); E [MPa] is a material Young's modulus (one-rib bending); $\alpha$ [1/K] is a thermal expansion coefficient of honeycomb in a direction perpendicular to a direction of gas flow, with a proviso of $\alpha \geqq 1 \times 10^{-6}$ ; GSA [m²/m³] is a geographical surface area per volume of honeycomb structure; $H_D$ [m] is a hydraulic diameter of the cell of honeycomb structure; $\rho_c$ [kg/m³] is a bulk density of honeycomb structure; C [J/kgK] is a material specific heat; and $\lambda_c$ [W/mK] is a thermal conductivity of the cell of honeycomb structure which is $\lambda \cdot b/p$ ($\lambda$ is a material thermal conductivity [W/mK], b is a rib thickness [m], and p is a cell pitch (an interval between ribs) [m])}.

2. A honeycomb structural body for exhaust gas purification according to claim 1
   which is provided with a thermal stress-relieving means for relieving a thermal stress applied to the cell partition walls and to the honeycomb outer wall in exhaust gas purification.

3. A honeycomb structural body for exhaust gas purification according to Claim 2, wherein the thermal stress-relieving means is at least one slit which is formed from the surface of the honeycomb outer wall toward the central axis of honeycomb structural body and at least part of which is open at the surface of the honeycomb outer wall.

4. A honeycomb structural body for exhaust gas purification according to Claim 2 or 3, wherein the thermal stress-relieving means is that the group of cells is divided into two or more first honeycomb segments at a plane parallel to the central axis of honeycomb structural body, the honeycomb segments being bonded to each other as necessary by a bonding layer, and an aspect ratio [(L1)/(P1)] of the first honeycomb segment between length (L1) in exhaust gas flow direction (central axis direction) and diameter (one side) (P1) satisfying a relation shown by the following expression (2).

$$2 \leqq [(L1)/(P1)] \leqq 10 \qquad (2)$$

5. A honeycomb structural body for exhaust gas purification according to any of Claims 2 to 4, wherein the thermal stress-relieving means is a form of multiple portions being constituted by dividing the group of cells into two or more second honeycomb segments at a plane perpendicular to the central axis, the second honeycomb segment satisfying a relation shown by the following expression (3) with respect to an aspect ratio [(L2)/(P2)] of the segment between a diameter (one side) (P2) and a length (L2) in exhaust gas flow direction.

$$0.5 \leqq [(P2)/(L2)] \leqq 5 \quad (3)$$

6. A honeycomb structural body for exhaust gas purification according to any of Claims 2 to 5, wherein the thermal stress-relieving means is at least one notch provided in the cell partition walls forming the group of cells, in the flow direction of exhaust gas (the central axis direction).

7. A honeycomb structural body for exhaust gas purification according to any of Claims 2 to 6, wherein the thermal stress-relieving means is that a sectional shape of the cells forming the group is a three or more cornered polygon.

8. A honeycomb structural body for exhaust gas purification according to any of Claims 2 to 7, wherein the thermal stress-relieving means is that a relation between a partition wall thickness ($T_{10}$) of the cells present in a portion extending from the central axis up to at least 10% of the radius (half of one side) and a basic cell partition wall thickness ($T_c$) satisfies a following expression (4).

$$1.2 \leqq T_{10}/T_c \quad (4)$$

9. A honeycomb structural body for exhaust gas purification according to any of Claims 2 to 8, wherein the thermal stress-relieving means is that the group of cells satisfies a following expression (5) with respect to an aspect ratio [(L3)/(P3)] of the whole group of cells between a length (L3) in the flow direction of exhaust gas (the axial direction) and a diameter (one side) (P3).

$$0.5 \leqq [(L3)/(P3)] \leqq 2 \quad (5)$$

10. A honeycomb catalyst body for exhaust gas purification, **characterized in that**, in the honeycomb structural body for exhaust gas purification set forth in any of Claims 1 to 9, a catalyst layer is loaded on the cell partition walls or a catalyst is contained in the cell partition walls.

11. A honeycomb catalyst body for exhaust gas purification according to Claim 10, wherein the catalyst layer or the catalyst contains an alkali metal and/or an alkaline earth metal.

12. A honeycomb catalyst body for exhaust gas purification according to Claim 10 or 11, wherein the main constituent material of the cell partition walls of the honeycomb structural body for exhaust gas purification contains at least one kind selected from the group consisting of alumina, zirconia, titania, zeolite, SiC, SiN, mullite, lithium aluminum silicate (LAS), titanium phosphate, perovskite, spinel, chamotte, non-oriented cordierite and mixtures or composites thereof.

13. A honeycomb catalyst body for exhaust gas purification according to Claim 10, wherein the catalyst layer or the

14. A honeycomb catalyst body for exhaust gas purification according to Claim 13, wherein the SCR catalyst material contains at least one kind selected from the group consisting of noble metals; V, VI, VII and VIII group transition metals; rare earth element oxides; two or more kinds of compound oxides selected from rare earth element oxides, or compound oxides between Zr and at least one kind selected from rare earth element oxides; oxides of alkali metals; and oxides of alkaline earth metals. catalyst is a SCR catalyst material having functions of the main catalyst and co-catalyst of SCR reaction or either of the functions.

15. A honeycomb catalyst body for exhaust gas purification according to Claim 13 or 14, wherein the main constituent material of the cell partition walls of the honeycomb structural body for exhaust gas purification contains at least one kind selected from the group consisting of alumina, zirconia, titania, zeolite, SiC, SiN, mullite, lithium aluminum silicate (LAS), titanium phosphate, perovskite, spinel, chamotte, non-oriented cordierite and mixtures or composites thereof.

16. A honeycomb catalyst body for exhaust gas purification according to any of Claims 13 to 15, wherein the main constituent material of the cell partition walls of the honeycomb structural body for exhaust gas purification contains at least one kind selected from the group consisting of $TiO_2$, zeolite, $Al_2O_3$ and compounds oxides of two or more kinds thereof.

**Patentansprüche**

1. Wabenstrukturkörper zur Reinigung von Abgasen, der Folgendes umfasst:

   eine Vielzahl von Zelltrennwänden (Rippen), die eine Gruppe von aneinander angrenzenden Zellen bildet, und eine Wabenaußenwand, die die Gruppe von Zellen umgibt und hält, wobei ein Abgas, das durch die Zellen strömt, durch eine Katalysatorschicht gereinigt wird, die auf die Zelltrennwände geladen wird, oder durch einen Katalysator, der in den Zelltrennwänden enthalten ist,
   **dadurch gekennzeichnet, dass** die Zelltrennwände eine durch folgenden Ausdruck (1) dargestellte Beziehung in Bezug auf Materialeigenschaften und Zellstruktur erfüllen:

$$\sigma/E \geq 0{,}0161 \cdot \alpha \cdot (GSA)\{H_D \cdot (\rho_c \cdot C \cdot \lambda_c)^{0{,}5}\} \qquad (1)$$

   {in dem Ausdruck (1) ist $\sigma$ [MPa] die Materialfestigkeit (Biegen einer Rippe); E [MPa] ist der Youngsche Elastizitätmodul des Materials (Biegen einer Rippe); $\alpha$ [1/K] ist der Wärmeausdehnungskoeffizient der Wabenstruktur in eine Richtung im rechten Winkel auf die Richtung des Gasstromes mit der Maßgabe, dass gilt: $\alpha \geq 1 \times 10^{-6}$; GSA [m²/m³] ist eine geografische Fläche pro Volumeneinheit der Wabenstruktur; $H_D$ [m] ist der hydraulische Durchmesser einer Zelle der Wabenstruktur; $\rho_c$ [kg/m³] ist die Dichte des Wabenstrukturvolumens; C [J/kgK] ist die spezifische Wärme des Materials und $\lambda_c$ [W/mK] ist die thermische Leitfähigkeit einer Zelle der Wabenstruktur, die $\lambda b/p$ ist ($\lambda$ ist die thermische Leitfähigkeit des Materials [W/mK], b ist die Rippendicke [m] und p ist der Zellabstand (Abstand zwischen den Rippen) [m]}.

2. Wabenstrukturkörper zur Abgasreinigung nach Anspruch 1, der mit einem Wärmespannungsabbaumittel zum Abbau von Wärmespannung bereitgestellt ist, das auf die Zelltrennwände und die Wabenaußenwand zur Abgasreinigung aufgebracht ist.

3. Wabenstrukturkörper zur Abgasreinigung nach Anspruch 2, worin das Wärmespannungsabbaumittel zumindest ein Spalt ist, der von der Oberfläche der Wabenaußenwand aus in Richtung der Mittelachse des Wabenstrukturkörpers ausgebildet ist und der zumindest teilweise an der Oberfläche der Wabenaußenwand offen ist.

4. Wabenstrukturkörper zur Abgasreinigung nach Anspruch 2 oder 3, worin das Wärmespannungsabbaumittel darin besteht, dass die Gruppe von Zellen in einer Ebene parallel zu der Mittelachse des Wabenstrukturkörpers in zwei oder mehr erste Wabensegmente unterteilt ist, wobei die Wabensegmente nach Bedarf durch eine Verbindungsschicht haftschlüssig miteinander verbunden sind und das Aspektverhältnis [(L1)/(P1)] des ersten Wabensegments von Länge (L1) in Abgasströmungsrichtung (Richtung der Mittelachse) und Durchmesser (eine Seite) (P1) eine durch folgenden Ausdruck (2) dargestelltes Verhältnis erfüllt:

$$2 \leq [(L1)/(P1)] \leq 10 \qquad (2).$$

5. Wabenstrukturkörper zur Abgasreinigung nach einem der Ansprüche 2 bis 4, worin das Wärmespannungsabbaumittel in Form mehrerer Abschnitte vorliegt, die **dadurch** gebildet werden, dass die Gruppen von Zellen in einer Ebene, die im rechten Winkel auf die Mittelachse steht, in zwei oder mehrere zweite Wabensegmente unterteilt wird, wobei das zweite Wabensegment eine durch folgenden Ausdruck (3) dargestellte Beziehung in Bezug auf das Aspektverhältnis [(P2)/(L2)] des Segments zwischen dem Durchmesser (eine Seite) (P2) und der Länge (L2) in Gasströmungsrichtung erfüllt:

$$0{,}5 \leq [(P2)/(L2)] \leq 5 \qquad (3).$$

6. Wabenstrukturkörper zur Abgasreinigung nach einem der Ansprüche 2 bis 5, worin das Wärmespannungsabbaumittel zumindest eine Aussparung ist, die in den Zelltrennwänden, die eine Gruppe von Zellen bilden, in Strömungsrichtung des Abgases (Richtung der Mittelachse) bereitgestellt ist.

7. Wabenstrukturkörper zur Abgasreinigung nach einem der Ansprüche 2 bis 6, worin das Wärmespannungsabbaumittel darin besteht, dass die Querschnittsform der Zellen, die die Gruppe bilden, ein drei- oder mehreckiges Vieleck ist.

8. Wabenstrukturkörper zur Abgasreinigung nach einem der Ansprüche 2 bis 5, worin das Wärmespannungsabbaumittel darin besteht, dass das Verhältnis zwischen der Trennwanddicke ($T_{10}$) der in einem Abschnitt vorliegenden Zellen, der sich von der Mittelachse bis zu etwa 10 % des Radius (Hälfte einer Seite) erstreckt, und der Basiszelltrennwanddicke ($T_c$) folgenden Ausdruck (4) erfüllt:

$$1,2 \le T_{10}/T_c \qquad (4).$$

9. Wabenstrukturkörper zur Abgasreinigung nach einem der Ansprüche 2 bis 8, worin das Wärmespannungsabbaumittel darin besteht, dass die Gruppe von Zellen folgenden Ausdruck (5) in Bezug auf das Seitenverhältnis [(L3)/(P3)] der gesamten Gruppe von Zellen zwischen der Länge (L3) in Strömungsrichtung des Abgases (Richtung der Mittelachse) und dem Durchmesser (eine Seite) (P3) erfüllt:

$$0,5 \le [(L3)/(P3)] \le 2 \qquad (5).$$

10. Wabenkatalysatorkörper zur Abgasreinigung, **dadurch gekennzeichnet, dass** in dem Wabenstrukturkörper zur Abgasreinigung nach einem der Ansprüche 1 bis 9 eine Katalysatorschicht auf die Zelltrennwände geladen wird oder ein Katalysator in den Zelltrennwänden enthalten ist.

11. Wabenkatalysatorkörper zur Abgasreinigung nach Anspruch 10, worin die Katalysatorschicht oder der Katalysator ein Alkalimetall und/oder ein Erdalkalimetall enthält.

12. Wabenkatalysatorkörper zur Abgasreinigung nach Anspruch 10 oder 11, worin das Material des Hauptbestandteils der Zelltrennwände des Wabenstrukturkörpers zur Abgasreinigung zumindest eine aus folgenden ausgewählte Art von Material umfasst: Aluminiumoxid, Zirconiumdioxid, Titanoxid, Zeolith, SiC, SiN, Mullit, Lithiumaluminiumsilicat (LAS), Titanphosphat, Perowskit, Spinell, Schamotte, nicht-gerichteten Cordierit und Gemische oder Verbundstoffe daraus.

13. Wabenkatalysatorkörper zur Abgasreinigung nach Anspruch 10, worin die Katalysatorschicht oder der Katalysator ein SCR-Katalysatormaterial ist, das die Funktionen von Hauptkatalysator und Co-Katalysator der SCR-Reaktion oder eine der beiden Funktionen erfüllt.

14. Wabenkatalysatorkörper zur Abgasreinigung nach Anspruch 13, worin das SCR-Katalysatormaterial zumindest eine Art von Material enthält, das aus der aus folgenden bestehenden Gruppe ausgewählt ist: Edelmetallen; Übergangsmetallen der Gruppen V, VI, VII und VIII; Seltenerdoxiden; zwei oder mehreren Arten von Verbindungsoxiden, die aus Seltenerdoxiden ausgewählt sind, oder Verbindungsoxiden zwischen Zr und zumindest einer aus Seltenerdoxiden ausgewählten Art; Alkalimetalloxiden und Erdalkalimetalloxiden.

15. Wabenkatalysatorkörper zur Abgasreinigung nach Anspruch 13 oder 14, worin das Hauptbestandteilmaterial der Zelltrennwände des Wabenstrukturkörpers zur Abgasreinigung zumindest eine Art von Material enthält, das aus der aus folgenden bestehenden Gruppe ausgewählt ist: Aluminiumoxid, Zirconiumdioxid, Titanoxid, Zeolith, SiC, SiN, Mullit, Lithiumaluminiumsilicat (LAS), Titanphosphat, Perowskit, Spinell, Schamotte, nicht-gerichteten Cordierit und Gemische oder Verbundstoffe daraus.

16. Wabenkatalysatorkörper zur Abgasreinigung nach einem der Ansprüche 13 bis 15, worin das Hauptbestandteilmaterial der Zelltrennwände des Wabenstrukturkörpers zur Abgasreinigung zumindest eine Art von Material enthält, das aus der aus folgenden bestehenden Gruppe ausgewählt ist: $TiO_2$, Zeolith, $Al_2O_3$ und Verbindungsoxide von

zwei oder mehreren Arten davon.

**Revendications**

1. Corps structurel en nid d'abeilles pour l'épuration des gaz d'échappement, qui comprend,
une pluralité de cloisons (nervures) de séparation de cellules formant un groupe de cellules adjacentes les unes aux autres, et
une cloison externe en nid d'abeilles entourant et maintenant le groupe de cellules, dans lequel un gaz d'échappement circulant à travers les cellules est épuré grâce à une couche de catalyseur devant être chargée sur les cloisons de séparation de cellules ou grâce à un catalyseur devant être contenu dans les cloisons de séparation de cellules, **caractérisé en ce que** les cloisons de séparation de cellules satisfont une relation représentée par l'expression suivante (1), par rapport aux propriétés du matériau et de la structure cellulaire :

$$\sigma / E \geq 0{,}0161 \cdot \alpha \cdot (\mathbf{GSA}) / \left\{ H_D \cdot (\rho_c \cdot C \cdot \lambda_c)^{0{,}5} \right\} \qquad (1)$$

{dans l'expression (1), $\sigma$ [MPa] est la résistance du matériau (flexion d'une nervure) ; E [MPa] est un module d'élasticité du matériau (flexion d'une nervure) ; $\alpha$ [1/k] est un coefficient de dilatation thermique du nid d'abeilles dans une direction perpendiculaire à une direction d'écoulement du gaz, à la condition que $\alpha \geq 1 \times 10^{-6}$ ; GSA [m$^2$/m$^3$] est une surface géographique par volume de la structure en nid d'abeilles ; $H_D$ [m] est un diamètre hydraulique de la cellule de la structure en nid d'abeilles ; $\rho_c$ [kg/m$^3$] est une masse volumique apparente de la structure en nid d'abeilles ; C [J/kgK] est une chaleur spécifique du matériau ; et $\lambda_c$ [W/mK] est une conductivité thermique de la cellule de la structure en nid d'abeilles qui est $\lambda \cdot$ b/p (À est une conductivité thermique du matériau [w/mK], b est une épaisseur de nervure [m], et p est un pas cellulaire (un intervalle entre les nervures) [m])}.

2. Corps structurel en nid d'abeilles pour l'épuration des gaz d'échappement selon la revendication 1, qui est doté de moyens de relaxation des contraintes thermiques destinés à éliminer une contrainte thermique appliquée sur les cloisons de séparation de cellules et sur la cloison externe en nid d'abeilles lors de l'épuration des gaz d'échappement.

3. Corps structurel en nid d'abeilles pour l'épuration des gaz d'échappement selon la revendication 2, dans lequel les moyens de relaxation de contrainte thermique sont au moins une fente qui est formée à partir de la surface de la cloison externe en nid d'abeilles vers l'axe central du corps structurel en nid d'abeilles et dont au moins une partie est ouverte à la surface de la cloison externe en nid d'abeilles.

4. Corps structurel en nid d'abeilles pour l'épuration des gaz d'échappement selon la revendication 2 ou 3, dans lequel les moyens de relaxation de contrainte thermique consistent en ce que le groupe de cellules est divisé en deux premiers segments en nid d'abeilles ou plus sur un plan parallèle à l'axe central du corps structurel en nid d'abeilles, les segments en nid d'abeilles étant assemblés l'un à l'autre si nécessaire par une couche de liaison, et un rapport d'aspect [(L1)/(P1)] du premier segment en nid d'abeilles entre la longueur (L1) dans la direction d'écoulement des gaz d'échappement (direction de l'axe central) et le diamètre (d'un côté) (P1) satisfaisant une relation représentée par l'expression suivante (2).

$$2 \leq [(\mathrm{L1}) / (\mathrm{P1})] \leq 10 \qquad (2)$$

5. Corps structurel en nid d'abeilles pour l'épuration des gaz d'échappement selon l'une quelconque des revendications 2 à 4, dans lequel les moyens de relaxation de contrainte thermique sont sous la forme de parties multiples constituées en divisant le groupe de cellules en deux deuxièmes segments en nid d'abeilles ou plus sur un plan perpendiculaire à l'axe central, et le deuxième segment en nid d'abeilles satisfaisant une relation représentée par l'expression (3) suivante par rapport à un rapport d'aspect [(L2)/(P2)] du segment entre un diamètre (d'un côté) (P2) et une longueur (L2) dans une direction d'écoulement des gaz d'échappement.

$$0,5 \le [(P2)/(L2)] \le 5 \qquad\qquad (3)$$

**6.** Corps structurel en nid d'abeilles pour l'épuration des gaz d'échappement selon l'une quelconque des revendications 2 à 5, dans lequel les moyens de relaxation de contrainte thermique sont au moins une encoche prévue dans les cloisons de séparation de cellules formant le groupe de cellules, dans la direction d'écoulement du gaz d'échappement (direction de l'axe central).

**7.** Corps structurel en nid d'abeilles pour l'épuration des gaz d'échappement selon l'une quelconque des revendications 2 à 6, dans lequel les moyens de relaxation de contrainte thermique consistent en ce qu'une forme en coupe des cellules formant le groupe est un polygone à trois angles ou plus.

**8.** Corps structurel en nid d'abeilles pour l'épuration des gaz d'échappement selon l'une quelconque des revendications 2 à 7, dans lequel les moyens de relaxation de contrainte thermique consistent en ce qu'une relation entre une épaisseur de cloison de séparation ($T_{10}$) des cellules présentes dans une partie s'étendant depuis un axe central jusqu'à 10% au moins du rayon (moitié d'un côté) et une épaisseur de cloison de séparation de cellules de base ($T_c$) satisfasse une expression suivante (4).

$$1,2 \le T_{10}/T_c \qquad\qquad (4)$$

**9.** Corps structurel en nid d'abeilles pour l'épuration des gaz d'échappement selon l'une quelconque des revendications 2 à 8, dans lequel les moyens de relaxation de contrainte thermique consistent en ce que le groupe de cellules satisfasse une expression suivante (5) par rapport à un rapport d'aspect [(L3)/(P3)] de l'ensemble du groupe de cellules entre une longueur (L3) dans la direction d'écoulement du gaz d'échappement (la direction axiale) et un diamètre (d'un côté) (P3).

$$0,5 \le [(L3)/(P3)] \le 2 \qquad\qquad (5)$$

**10.** Corps catalyseur en nid d'abeilles pour l'épuration des gaz d'échappement **caractérisé en ce que**, dans le corps structurel en nid d'abeilles pour l'épuration des gaz d'échappement selon l'une quelconque des revendications 1 à 9, une couche de catalyseur est chargée sur les cloisons de séparation de cellules ou un catalyseur est contenu dans les cloisons de séparation de cellules.

**11.** Corps catalyseur en nid d'abeilles pour l'épuration des gaz d'échappement selon la revendication 10, dans lequel la couche de catalyseur ou le catalyseur contient un métal alcalin et/ou un métal alcalino-terreux.

**12.** Corps catalyseur en nid d'abeilles pour l'épuration des gaz d'échappement selon la revendication 10 ou 11, dans lequel le matériau constituant principal des cloisons de séparation de cellules du corps structurel en nid d'abeilles pour l'épuration des gaz d'échappement contient au moins un type de substance choisi dans le groupe constitué par l'alumine, la zircone, le dioxyde de titane, la zéolite, le SiC, le SiN, la mullite, le lithium, le silicate d'aluminium (LAS), le phosphate de titane, la pérovskite, la spinelle, la chamotte, la cordiérite non orientée et les mélanges ou composites de ceux-ci.

**13.** Corps catalyseur en nid d'abeilles pour l'épuration des gaz d'échappement selon la revendication 10, dans lequel la couche de catalyseur ou le catalyseur est un matériau catalyseur SCR ayant les fonctions du catalyseur principal et du co-catalyseur de réaction SCR ou l'une ou l'autre de ces fonctions.

**14.** Corps catalyseur en nid d'abeilles pour l'épuration des gaz d'échappement selon la revendication 13, dans lequel le matériau catalyseur SCR contient au moins un type de substance choisi dans le groupe constitué par les métaux nobles ; les métaux de transition de groupes V, VI, VII et VIII ; les oxydes d'éléments de terres rares ; deux types d'oxydes de composé ou plus choisis parmi des oxydes d'éléments des terres rares , ou d'oxydes de composés entre Zr et au moins un type de substance choisi parmi les oxydes d'éléments des terres rares ; les oxydes de métaux alcalins ; et les oxydes de métaux alcalino-terreux.

15. Corps catalyseur en nid d'abeilles pour l'épuration des gaz d'échappement selon la revendication 13 ou 14, dans lequel le matériau constituant principal des cloisons de séparation de cellules du corps structurel en nid d'abeilles pour l'épuration des gaz d'échappement contient au moins un type de substance choisi dans le groupe constitué par l'alumine, la zircone, le dioxyde de titane, la zéolite, le SiC, le SiN, la mullite, le lithium, le silicate d'aluminium (LAS), le phosphate de titane, la pérovskite, la spinelle, la chamotte, la cordiérite non orientée et les mélanges ou composites de ceux-ci.

16. Corps catalyseur en nid d'abeilles pour l'épuration des gaz d'échappement selon la revendication 13 à 15, dans lequel le matériau constituant principal des cloisons de séparation de cellules du corps structurel en nid d'abeilles pour l'épuration des gaz d'échappement contient au moins un type de substance choisi dans le groupe constitué par le $TiO_2$, la zéolite, l'$Al_2O_3$ et les oxydes de composés de deux types ou plus de ceux-ci.

FIG.1(a)              FIG.1(b)

EP 1 419 816 B1

FIG.2(a)

FIG.2(c)

FIG.2(b)

FIG.2(d)

41

FIG.3(a)

FIG.3(b)

FIG.4(a)

FIG.4(b)

FIG.5(a)

FIG.5(b)

FIG.5(c)

FIG.5(d)

EP 1 419 816 B1

FIG.6(a)

FIG.6(b)

FIG.6(c)

FIG.6(d)

44

FIG.7

FIG.8

FIG.9(a)

FIG.9(b)                    FIG.9(c)

FIG.9(d)

FIG.10(a)

FIG.10(b)

FIG.11(a)

FIG.11(b)

FIG.12(a)

FIG.12(b)

FIG.13(a)

FIG.13(b)

FIG.13(c)

FIG.13(d)

FIG.14

FIG.15

40mm OR MORE

1 CELL TO SEVERAL CELLS

FIG.16

FOUR-POINT BENDING TEST

FIG.17

FIG.18

FIG.19

FIG.20

FIG.21

FIG.22

FIG.23

FIG.24(a)     FIG.24(b)     FIG.24(c)

FIG.25

FIG.26

EXPRESSION ( 1) (RIGHT SIDE = LEFT SIDE)

LEFT SIDE OF EXPRESSION FORMULA ( 1)

(EXAMPLE)

(COMPARATIVE EXAMPLE)

RIGHT SIDE OF EXPRESSION FORMULA ( 1)

EP 1 419 816 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000279810 A
- JP 10165817 A

- JP 6134304 A